(19) Europäisches Patentamt
European Patent Office
Office européen des brevets

(11) **EP 2 599 234 B1**

(12) **EUROPEAN PATENT SPECIFICATION**

(45) Date of publication and mention of the grant of the patent:
**28.03.2018 Bulletin 2018/13**

(21) Application number: **10739447.0**

(22) Date of filing: **29.07.2010**

(51) Int Cl.:
*H04B 7/022* (2017.01)    *H04B 7/026* (2017.01)
*H04B 7/0413* (2017.01)    *H04B 7/06* (2006.01)
*H04B 7/155* (2006.01)    *H04B 7/204* (2006.01)
*H04B 7/26* (2006.01)

(86) International application number:
**PCT/US2010/043655**

(87) International publication number:
**WO 2012/015409 (02.02.2012 Gazette 2012/05)**

(54) **A MULTIPLE-IN-MULTIPLE-OUT NETWORK-CODED AMPLIFY-AND-FORWARD RELAYING SCHEME FOR THREE NODE BIDIRECTIONAL COOPERATION**

NETZWERK-KODIERTES AMPLIFY-AND-FORWARD-ZWISCHENVERSTÄRKER-VERFAHREN MIT MEHREREN EINGÄNGEN UND AUSGÄNGEN FÜR BIDIREKTIONELLE ZUSAMMENARBEIT DREIER KNOTEN

PROCÉDÉ DE RELAIS POUR AMPLIFIER-ET-TRANSFÉRER PAR UN RÉSEAU CODÉ À ENTRÉES MULTIPLES ET SORTIES MULTIPLES POUR UNE COOPÉRATION BIDIRECTIONNELLE ENTRE TROIS NOEUDS

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.06.2013 Bulletin 2013/23**

(73) Proprietor: **Thomson Licensing DTV**
**92130 Issy-les-Moulineaux (FR)**

(72) Inventors:
• **LI, Jialing**
**Brooklyn**
**New York 11214 (US)**

• **GAO, Wen**
**West Windsor**
**New Jersey 08550 (US)**

(74) Representative: **Desvignes, Agnès et al**
**Marks & Clerk France**
**Immeuble Visium**
**22, avenue Aristide Briand**
**94117 Arcueil Cedex (FR)**

(56) References cited:
**US-A1- 2007 149 117    US-A1- 2009 268 790**
**US-A1- 2010 173 659**

**Description**

FIELD OF THE INVENTION

The present invention is directed to a three node cooperation scheme to assist in bidirectional transmissions (communications) of the draft IEEE 802.11n standard.

BACKGROUND OF THE INVENTION

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

Consider multicast (downlink) and multi-access (uplink) channels with one access point (AP) and several nodes. In the IEEE 802.11n draft standard, a reverse direction (RD) protocol is introduced for fast scheduling of bidirectional traffic flows within a transmission opportunity (TXOP). The reverse direction protocol permits (allows) the node, which has obtained the TXOP to grant reverse directional transmissions to another node while it is still in control of the TXOP. If the channel conditions between the nodes are inadequate (poor) then transmissions between the two nodes suffer. That suffering may be reduced data rate and/or throughput.

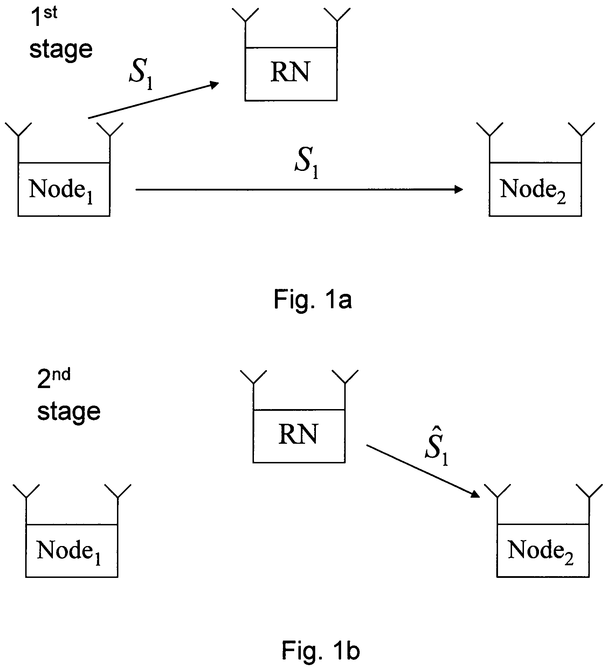

In the IEEE 802.11n draft standard, a reverse direction (RD) protocol has been proposed as in Fig. 1. The reverse direction protocol of the IEEE 802.11n draft standard only schedules bidirectional transmission between two nodes. Each node is both a source node and a destination node. There is no existing scheduling protocol for three-node bidirectional transmissions in IEEE 802.11 WLAN standards. Fig. 1 illustrates the conventional unidirectional cooperation using a half-duplex relay node (RN). Fig. 1a shows the first stage of communication, in which $Node_1$ transmits (sends, communicate) data $S_1$ to both $Node_2$ and the RN. Fig. 1b shows stage 2 of communication, in which the RN transmits (communicates, sends) data $\hat{S}_1$ to $Node_2$. That is, the RN transmits (communicates, forwards, sends) data $S_1$ as $\hat{S}_1$ to $Node_2$. Correspondingly (and not shown), in the third stage of communication, $Node_2$ transmits (sends, communicate) data $S_2$ to both $Node_1$ and the RN. In the fourth stage of communication, the RN transmits (communicates, forwards, sends) data $\hat{S}_2$ to $Node_1$. That is, the RN transmits (communicates, forwards, sends) data $S_2$ as $\hat{S}_2$ to $Node_1$. Thus, in the conventional approach, there are four stages (phases) to complete communications using the half-duplex RN to assist $Node_1$ and $Node_2$.

Network-coded three-node bidirectional cooperation with three stages (i.e., the reception of signals from nodes (source and destination) at the RN are orthogonal (separate)) has been studied, using Decode-and-Forward, Soft Decode-and-Forward, and Amplify-and-Forward in a single-antenna system, and a case when $L_1 = L_2 = 1$ and $L_R = 2$ etc, respectively. Note that $L_i, i = 1,2,R$ represents the number of antennas at $Node_1$, $Node_2$ and RN respectively. The present invention uses Amplify-and-Forward for the general MIMO case with an arbitrary number of antennas at the nodes. This has not been addressed in any publications known to the Applicants.

US 2007/0149117A1, Hwang et al, describes a method and system for transmitting and receiving signals using multiple antennas in a wireless transmission system. A relay node receives a first signal from a base station according to a first signal scheme and a second signal from a mobile station according to a second signal scheme. The relay node generates a third signal by performing an XOR operation on the first signal and the second signal and then multiplies the third signal by a weight matrix and transmits the multiplied third signal to both the base station and the mobile station.

SUMMARY OF THE INVENTION

As used herein a node includes (but is not limited to) a station (STA), a mobile device, a mobile terminal, a dual mode smart phone, a computer, a laptop computer or any other equivalent device capable of operating under the IEEE 802.11n draft standard.

Consider multicast (downlink) and multi-access (uplink) channels with one access point (AP) and several nodes. In the IEEE 802.11n draft standard, a reverse direction (RD) protocol is introduced for fast scheduling of bidirectional traffic flows within a transmission opportunity (TXOP). The reverse direction protocol permits (allows) the node, which has obtained the TXOP to grant reverse directional transmissions to another node while it is still in control of the TXOP. However, when the channel state (channel conditions) between the two nodes is not sufficient for providing fast and reliable transmissions (communication) between them, cooperation through a third node, a half-duplex relay node (RN), may be involved to assist transmissions (communications). When the transmission between these two nodes involves cooperation through a third node, a half-duplex relay node (RN), the situation becomes more complicated, and wireless network coding can be utilized to further increase system throughput. Each node is both a source node and a destination node.

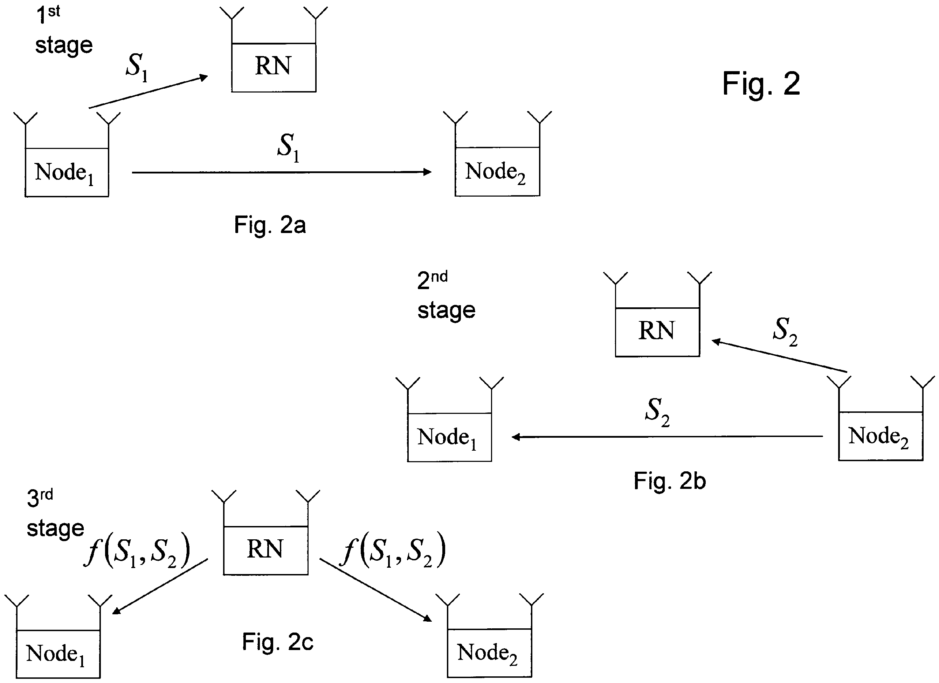

In the present invention, as shown in Fig. 2 and described more fully below, wireless network coding is introduced into the system and combined with bidirectional cooperation to increase system throughput. The present invention describes a network-coded amplify-and-forward (NCAF) relaying scheme in such a three-node bidirectional cooperation scenario.

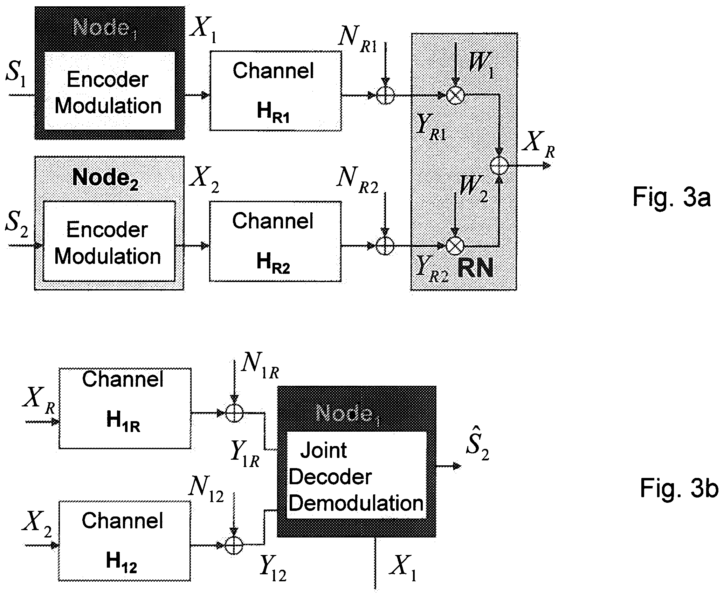

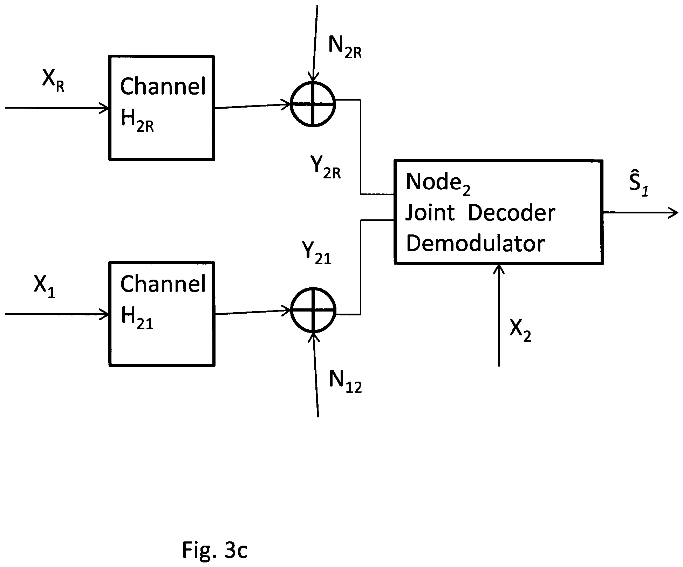

In three-node bidirectional cooperation scheme of the present invention, two nodes, $Node_1$ and $Node_2$, are both source and destination nodes, and the RN is a relay node, assisting the bidirectional transmission between $Node_1$ and $Node_2$. The relay node (RN) sequentially receives signals from both $Node_1$ and $Node_2$, combines the two signals with pre-coding matrices for both of them, and broadcasts the mixed signal to both nodes on orthogonal channels. Each of the nodes (source and destination) receives both the transmission (communication) of the desired signal from the other node, and the transmission (communication) of the mixed signal from the RN. Each node can jointly decode the data it desires based on the knowledge of the signal it sent out (transmitted, communicated). The process is shown in Fig. 3, which will be further described below. The present invention not only describes the above network-coded amplify-and-forward (NCAF) relaying scheme, but also solves the design problem of the pre-coding matrices at RN for the received signals from the nodes (source and destination), so as to maximize the instantaneous capacity of the bidirectional cooperation system, subject to a total power constraint at the RN, given channel state information (CSI) in two cases:

(1) Without CSI of direct links at the RN: Only CSI of the channels from the nodes (source and destination) to the RN, and the channels from the RN to the nodes (source and destination), are known at the RN. CSI of the channels between the two nodes (source and destination) is not known at the RN.
(2) With CSI of the direct links at the RN: CSI of the channels from the nodes (source and destination) to the RN, and the channels from RN to the nodes (source and destination), and the channels between the two nodes (source and destination) are known at the RN.

In the Network-Coded Amplify-and-Forward (NCAF) relaying scheme of the present invention, the RN no longer forwards the amplified received signals from one node to another as in conventional amplify-and-forward cooperation. Instead, the RN combines two received signals from two nodes by firstly multiplying them with pre-coding matrices. Then the RN broadcasts (multicasts) the combined signal, which contains the mixed data of the bidirectional traffic flow. Each end node receives the signal from the RN. The nodes can then jointly decode its desired signal based on the knowledge of the signal it has sent out (transmitted, communicated). There is still diversity in the cooperation.

The NCAF relaying scheme of the present invention, may prove to be essential to the future the IEEE 802.11 draft Very High Throughput (VHT) standard. The advantage of the NCAF relaying scheme of the present invention is that only simple processing, i.e., linear pre-coding, is needed at the relay node (RN). It is also compatible with conventional cooperation using an amplify-and-forward relaying scheme. The NCAF relaying scheme of the present invention also solves the problem when the RN is not able to decode the received data due to an insufficient number of antennas equipped at the RN and is always feasible for any multiple-antenna systems.

A method and apparatus are described including receiving a first signal including first data in a first time slot of a first channel, receiving a second signal including second data in a second time slot of a second channel, determining a first pre-coding matrix, determining a second pre-coding matrix, applying the first pre-coding matrix to the first data to produce pre-coded first data, applying the second pre-coding matrix to the second data to produce second pre-coded data, generating a third signal by combining the pre-coded first data and the pre-coded second data and transmitting the third signal on the first channel and on the second channel. Also described are a method and apparatus including transmitting a first signal, receiving a second signal and jointly decoding the second signal including a first training sequence by removing the first training sequence and removing the first signal.

BRIEF DESCRIPTION OF THE DRAWINGS

The present invention is best understood from the following detailed description when read in conjunction with the accompanying drawings. The drawings include the following figures briefly described below:

Fig. 1 shows the amplify-and-forward relaying scheme.
Fig. 2 shows the operation of the Network-Coded Amplify-and-Forward relaying scheme for bidirectional cooperation of the present invention using a half-duplex relay node.
Fig. 3a is a block diagram of the operation of an exemplary embodiment of the transmission side of the Network-Coded Amplify-and-Forward relaying scheme of the present invention.
Fig. 3b is a block diagram of the operation of an exemplary embodiment of the reception side of the Network-Coded Amplify-and-Forward relaying scheme of the present invention from the perspective of $Node_1$.
Fig. 3c is a block diagram of the operation of an exemplary embodiment of the reception side of the Network-Coded Amplify-and-Forward relaying scheme of the present invention from the perspective of $Node_2$.

Fig. 4 is collectively simplified exemplary frame structures for the Network-Coded Amplify-and-Forward relaying scheme without beamforming at source nodes of the present invention.

Fig. 5 is collectively simplified exemplary frame structures for the Network-Coded Amplify-and-Forward relaying scheme with beamforming at source nodes of the present invention.

Fig. 6 is a flowchart of an exemplary embodiment of the present invention from the perspective of a node (source and destination).

Fig. 7 is a flowchart of an exemplary embodiment of the present invention from the perspective of a relay node.

## DETAILED DESCRIPTION OF THE PREFERRED EMBODIMENTS

Fig. 2 shows the operation of the Network-Coded Amplify-and-Forward relaying scheme for bidirectional cooperation of the present invention using a half-duplex relay node. Fig. 2a shows the first stage of communication, in which $Node_1$ transmits (sends, communicates) data $S_1$ to both $Node_2$ and the RN. In the second stage of communication as shown in Fig. 2b, $Node_2$ transmits (sends, communicate) data $S_2$ to both $Node_1$ and the RN. In the third stage of communication as shown in Fig. 2c, the RN combines (mixes) data $\hat{S}_1 + \hat{S}_2$ for transmission (communication) to both $Node_1$ and $Node_2$. Data $\hat{S}_1 + \hat{S}_2$ is formed by applying pre-coding matrices to data $S_1$ and data $S_2$. The combination of data $\hat{S}_1 + \hat{S}_2$ is $f(S_1 + S_2)$. The number of stages has thus been reduced from four stages to three stages. It should be noted that in addition to applying pre-coding matrices to the data, beamforming matrices may also be applied to the data.

A system model and some notation is introduced first. $X_i$ is the signal transmitted from $Node_i$ ($i=1,2,R$, and $Node_R$ denotes the RN). $Q_i$ is the beamforming matrix at $Node_i$, and it is an identity matrix if beamforming is not used. $H_{ij}$ is the channel matrix from $Node_j$ to $Node_i$. $Y_{ij}$ and $N_{ij}$ are the received signal and noise from $Node_j$, to $Node_i$, elements are assumed to be independent and identically distributed Gaussian with variance $\sigma_n^2$. $W_i$ is the pre-coding matrix applied to $Y_{Ri}$ at RN. The total transmitted power is $P_i$ at $Node_i$ ($i=1,2$) and $P_R$ at the RN.

The RN receives $Y_{R1} = H_{R1}Q_1X_1 + N_{R1}$ from $Node_1$ in the 1st time slot, and $Y_{R2} = H_{R2}Q_2X_2 + N_{R2}$ from $Node_2$ in the 2nd time slot. Then the RN mixes the weighted received signals as its broadcast signal

$$X_R = W_1 Y_{R1} + W_2 Y_{R2} = W_1 H_{R1} Q_1 X_1 + W_2 H_{R2} Q_2 X_2 + W_1 N_{R1} + W_2 N_{R2}.$$

The reception and decoding at one node (source and destination) is used as an example. It goes without saying that demodulation is performed at the reception end. The processing at the other node (source and destination) is similar. $Node_1$ receives $Y_{12} = H_{12}Q_2X_2 + N_{12}$ from $Node_2$ in the 2nd time slot, and $Y_{1R} = H_{1R}X_R + N_{1R}$ from the RN in the 3rd time slot, i.e., $Y_{1R} = H_{1R}W_1 H_{R1} Q_1 X_1 + H_{1R}W_2 H_{R2} Q_2 X_2 + H_{1R}W_1 N_{R1} + H_{1R}W_2 N_{R2} + N_{1R}$. The matrix form is

$$\begin{bmatrix} Y_{12} \\ Y_{1R} \end{bmatrix} = \begin{bmatrix} \mathbf{0}_{N_t} \\ H_{1R}W_1 H_{R1} \end{bmatrix} Q_1 X_1 + \begin{bmatrix} H_{12} \\ H_{1R}W_2 H_{R2} \end{bmatrix} Q_2 X_2 + \begin{bmatrix} \mathbf{I}_{N_1} & \mathbf{0}_{N_1 \times N_R} & \mathbf{0}_{N_1 \times N_R} & \mathbf{0}_{N_1} \\ \mathbf{0}_{N_1} & H_{1R}W_1 & H_{1R}W_2 & \mathbf{I}_{N_1} \end{bmatrix} \begin{bmatrix} N_{12} \\ N_{R1} \\ N_{R2} \\ N_{1R} \end{bmatrix} \quad (1),$$

i.e., $Y_1 = D_1X_1 + A_1X_2 + B_1N_1$, where $Y_1 = [Y_{12} \ Y_{1R}]^T \in C^{2L_1 \times 1}$, $\mathbf{0}_{N_i \times N_j} \in C^{L_i \times L_j}$ is a zero matrix, and $\mathbf{I}_N \in C^{N \times N}$ is an identity matrix. Note that at $Node_1$, $X_1$ is known, but $X_2$ is unknown and to be detected. $N_1 = [N_{12} \ N_{R1} \ N_{R2} \ N_{1R}]^T \in C^{2(L_1 + L_R) \times 1}$ is the noise vector at $Node_1$, and the matrices,

$$D_1 = \begin{bmatrix} \mathbf{0}_{N_1} \\ H_{1R}W_1 H_{R1} \end{bmatrix} Q_1, \quad A_1 = \begin{bmatrix} H_{12} \\ H_{1R}W_2 H_{R2} \end{bmatrix} Q_2$$

and

$$B_1 = \begin{bmatrix} \mathbf{I}_{N_1} & \mathbf{0}_{N_1 \times N_R} & \mathbf{0}_{N_1 \times N_R} & \mathbf{0}_{N_1} \\ \mathbf{0}_{N_1} & H_{1R}W_1 & H_{1R}W_2 & \mathbf{I}_{N_1} \end{bmatrix}$$

are assumed known. Based on the knowledge of $X_1$, $Node_1$ can obtain $Z_1 = Y_1 - D_1X_1 = A_1X_2 + B_1N_1$, where $Z_1$ is the equivalent received signal, and $A_1$ is the equivalent channel matrix for signal $X_2$. Then $Node_1$ can jointly decode $X_2$.

Similarly, $Z_2 = A_2X_1 + B_2N_2$, where $Z_2$, $A_2$, $B_2$ and $N_2$ are defined by exchanging the subscripts "1" and "2", and "$N_1$" and "$N_2$" in their counterparts.

The problem is to determine $W_1$ and $W_2$, $W_i \in C^{L_R \times L_R}$, $i = 1,2$, to maximize the instantaneous capacity of the system, subject to the transmit power constraint at the RN. $W_1$ and $W_2$ are the pre-coding matrices. That is, determine $W_1$ and $W_2$, to maximize

$$f = \log\det\left(I_{2N_1} + \frac{P_2}{N_2\sigma_n^2}\left(A_1 A_1^H\right)\left(B_1 B_1^H\right)^{-1}\right) + \log\det\left(I_{2N_2} + \frac{P_1}{N_1\sigma_n^2}\left(A_2 A_2^H\right)\left(B_2 B_2^H\right)^{-1}\right), (1)$$

subject to $\frac{P_1}{N_1}tr\{W_1 H_{R1} Q_1 Q_1^H H_{R1}^H W_1^H\} + \sigma_n^2 tr\{W_1 W_1^H\} + \frac{P_2}{N_2}tr\{W_2 H_{R2} Q_2 Q_2^H H_{R2}^H W_2^H\} + \sigma_n^2 tr\{W_2 W_2^H\} = P_R$, where $tr(X)$ represents the trace of the matrix X.

Letting $Q_i$, $i$=1,2 be a unitary matrix, the constraint can be simplified to

$$\frac{P_1}{N_1}tr\{W_1 H_{R1} H_{R1}^H W_1^H\} + \sigma_n^2 tr\{W_1 W_1^H\} + \frac{P_2}{N_2}tr\{W_2 H_{R2} H_{R2}^H W_2^H\} + \sigma_n^2 tr\{W_2 W_2^H\} = P_R. \tag{2}$$

In the first case, the CSI of the channels (links) from Node$_i$ to the RN and the RN to Node$_j$, are assumed available at the RN. The CSI of the links (channels) between Node$_i$ and Node$_j$, $i,j$=1,2 and $i \neq j$ is not available. In this scenario, it is necessary to maximize an upper bound of $f$ instead of $f$ itself due to the lack of information in it. That is, determine $W_1$ and $W_2$, to maximize

$$f_1 = \log\det\left(I_{N_1} + \frac{P_2}{N_2\sigma_n^2} H_{1R} W_2 H_{R2} H_{R2}^H W_2^H H_{1R}^H \left(I_{N_1} + H_{1R} W_1 W_1^H H_{1R}^H + H_{1R} W_2 W_2^H H_{1R}^H\right)^{-1}\right)$$

$$+ \log\det\left(I_{N_2} + \frac{P_1}{N_1\sigma_n^2} H_{2R} W_1 H_{R1} H_{R1}^H W_1^H H_{2R}^H \left(I_{N_2} + H_{2R} W_1 W_1^H H_{2R}^H + H_{2R} W_2 W_2^H H_{2R}^H\right)^{-1}\right)$$

$$(3)$$

subject to $\frac{P_1}{N_1}tr\{W_1 H_{R1} H_{R1}^H W_1^H\} + \sigma_n^2 tr\{W_1 W_1^H\} + \frac{P_2}{N_2}tr\{W_2 H_{R2} H_{R2}^H W_2^H\} + \sigma_n^2 tr\{W_2 W_2^H\} = P_R$ as shown in Equation (2).

In the second case, the CSI of channels from Node$_i$ to the RN, from the RN to Node$_j$, and from Node$_i$ to Node$_j$, are assumed to be available to the RN, $i,j$=1,2 and $i \neq j$. In this scenario, the design problem is to maximize (1) subject to (2).

By the singular value decomposition (SVD) theorem, the channels (links) can be decomposed to

$$H_{R1} = U_{R1}\Lambda_{R1}^{1/2}V_{R1}^H, \qquad H_{R2} = U_{R2}\Lambda_{R2}^{1/2}V_{R2}^H, \qquad H_{1R} = U_{1R}\Lambda_{1R}^{1/2}V_{1R}^H \text{ and } H_{2R} = U_{2R}\Lambda_{2R}^{1/2}V_{2R}^H, \text{ where }$$

$U_{R1}, U_{R2}, V_{1R}, V_{2R} \in C^{L_R \times L_R}$, $V_{R1}, U_{1R} \in C^{L1 \times L1}$, and $V_{R2}, U_{2R} \in C^{L2 \times L2}$ are unitary matrices; $\Lambda_{ij}^{1/2} \in C^{L_i \times L_j}$, $i,j$=1,2,R,

are the singular value matrices. In particular, $\Lambda_{ij} = \Lambda_{ij}^{1/2}(\Lambda_{ij}^{1/2})^H = diag\{\lambda_{ij,k}\} \in C^{L_i \times L_i}$, $i,j$ = 1,2,R, where $(\cdot)^T$ and $(\cdot)^H$ represent the matrix transpose and conjugate transpose operations, respectively. Also define

$T = V_{1R}^H V_{2R} \in C^{L_R \times L_R}$ and denote $T = (t_{ij})$, $i,j$ = 1,..., $L_R$.

When the CSI of direct links between Node$_1$ and Node$_2$ is not available, let $W_1 = V_{2R}\tilde{W}_1 U_{R1}^H$ and

$$W_2 = V_{1R} \tilde{W}_2 U_{R2}^H$$, where $\tilde{W}_1, \tilde{W}_2 \in C_R^{L_R \times L_R}$ are to be determined. There is no closed form solution. But $\tilde{W}_1$ and $\tilde{W}_2$ can be solved iteratively using Newton's method.

Furthermore, the problem statement can be rewritten in the following form, where the notation will be explained after the approach is introduced.

$$\text{Determine } \lambda, \text{ to minimize } f_2(\lambda) \qquad (4)$$

$$\text{subject to } \lambda \geq 0, \qquad (5)$$

$$S\lambda = q. \qquad (6)$$

The Lagrangian function is

$$L(\lambda, \mu) = f_2(\lambda) - \mu^T(S\lambda - q), \qquad (7)$$

where $\mu$ is the vector containing the Lagrangian multipliers. Using Newton's method, the following iterative approach is used to solve for $\lambda$ :

**Step 1:** Initiate $\lambda^0 \in (0, \mathbf{max\_}\lambda)$.
**Step 2:** In each iteration, solve

$$\begin{bmatrix} \nabla^2 f_2(\lambda^k) & -S^T \\ -S & 0 \end{bmatrix} v^k = \begin{bmatrix} S^T \mu^k - \nabla f_2(\lambda^k) \\ S\lambda^k - q \end{bmatrix} \text{ for } v^k = \begin{pmatrix} v_\lambda^k \\ v_\mu^k \end{pmatrix}. \qquad (8)$$

**Step 3:** Take as next iteration

$$\begin{pmatrix} \lambda^{k+1} \\ \mu^{k+1} \end{pmatrix} = \begin{pmatrix} \lambda^k \\ \mu^k \end{pmatrix} + \begin{pmatrix} v_\lambda^k \\ v_\mu^k \end{pmatrix}. \qquad (9)$$

**Step 4:** If $sum(sign(\lambda^{k+1})) \neq length(\lambda^{k+1})$ or $sum(sign(\mathbf{max\_}\lambda - \lambda^{k+1})) \neq length(\lambda^{k+1})$, go back to **Step 1.** Otherwise, go to **Step 5.**
**Step 5:** If $\left\| v_\lambda^k \right\|^2 < Threshold$, stop. Otherwise, $k = k + 1$, and go to **Step 2.**

In **Step 4,** given $\mathbf{x} = (x_1, ..., x_M)^T$ is a column vector or length $M$, $length(\mathbf{x}) = M$ and

$$sum(\mathbf{x}) = \sum_{i=1}^{length(\mathbf{x})} x_i.$$

$$sign(x) = \begin{cases} 1, \text{ if } x > 0 \\ 0, \text{ if } x = 0 \\ -1, \text{ if } x < 0 \end{cases}, \text{ and } sign(\mathbf{x}) = (sign(x_1), ..., sign(x_M))^T.$$

Condition $\alpha_i$ is defined as "when $L_i \geq L_R$, or when both $L_i < L_R$ and $L_i(L_i - 1) \geq L_R$ are satisfied", and condition $\beta_i$ is defined as "when both $L_i < L_R$ and $L_i(L_i - 1) \leq L_R - 1$ are satisfied". Therefore, there are three cases of solution as follows:

*General Case 1:* When $\alpha_1$ and $\alpha_2$ exist, both $\tilde{W}_1$ and $\tilde{W}_2$ are identity matrices multiplied by constants, respectively, i.e., $\tilde{W}_1 = \lambda_1 I_{L_R}$, $\tilde{W}_2 = \lambda_2 I_{L_R}$, $\lambda_1, \lambda_2, \geq 0$. The notation in the iterative approach is as follows:

$$\mathbf{max\_\lambda} = \left( {P_R}\big/{d_a \sigma_n^2}, {P_R}\big/{d_b \sigma_n^2} \right)^T, \quad \boldsymbol{\mu} = \mu \text{ and } \mathbf{v}^k = \left( v_{\lambda_1}^k, v_{\lambda_2}^k, v_\mu^k \right)^T. \quad \mathbf{S} = (d_a, d_b), \quad \mathbf{q} = {P_R}\big/{\sigma_n^2},$$

$$\lambda = (\lambda_1, \lambda_2)^T,$$

where $\displaystyle c_{a,i} = \frac{P_1}{L_1 \sigma_n^2}\lambda_{R1,i} + 1, \quad c_{b,i} = \frac{P_2}{L_2 \sigma_n^2}\lambda_{R2,i} + 1, \quad i=1,\dots,M, \quad d_a = \sum_{i=1}^M c_{a,i}, \quad d_b = \sum_{i=1}^M c_{b,i},$ and $M = \min(L_1 L_2, L_R)$.

The Hessian and gradient of $f_2(\lambda)$ are expressed as following:

$$\nabla^2 f_2(\lambda^k) = \begin{pmatrix} \dfrac{\partial^2 f_2(\lambda^k)}{\partial \lambda_1^2} & \dfrac{\partial^2 f_2(\lambda^k)}{\partial \lambda_1 \partial \lambda_2} \\ \dfrac{\partial^2 f_2(\lambda^k)}{\partial \lambda_1 \partial \lambda_2} & \dfrac{\partial^2 f_2(\lambda^k)}{\partial \lambda_2^2} \end{pmatrix}$$ and

$$\nabla f_2(\lambda^k) = \begin{pmatrix} \dfrac{\partial f_2(\lambda^k)}{\partial \lambda_1} \\ \dfrac{\partial f_2(\lambda^k)}{\partial \lambda_2} \end{pmatrix},$$ where $\displaystyle \frac{\partial f_2(\lambda)}{\partial \lambda_1} = \sum_{i=1}^M \left( -m_{1,i} + m_{2,i} - c_{a,i} m_{3,i} + m_{4,i} \right),$

$$\frac{\partial f_2(\lambda)}{\partial \lambda_2} = \sum_{i=1}^M \left( -c_{b,i} m_{1,i} + m_{2,i} - m_{3,i} + m_{4,i} \right), \qquad \frac{\partial^2 f_2(\lambda)}{\partial \lambda_1^2} = \sum_{i=1}^M \left( m_{1,i}^2 - m_{2,i}^2 + c_{a,i}^2 m_{3,i}^2 - m_{4,i}^2 \right),$$

$$\frac{\partial^2 f_2(\lambda)}{\partial \lambda_1 \partial \lambda_2} = \sum_{i=1}^M \left( c_{b,i} m_{1,i}^2 - m_{2,i}^2 + c_{a,i} m_{3,i}^2 - m_{4,i}^2 \right), \quad \frac{\partial^2 f_2(\lambda)}{\partial \lambda_2^2} = \sum_{i=1}^M \left( c_{b,i}^2 m_{1,i}^2 - m_{2,i}^2 + m_{3,i}^2 - m_{4,i}^2 \right),$$ and

$$m_{1,i} = \frac{\lambda_{1R,i}}{1 + \lambda_1 \lambda_{1R,i} + \lambda_2 c_{b,i}\lambda_{1R,i}}, \quad m_{2,i} = \frac{\lambda_{1R,i}}{1 + \lambda_1 \lambda_{1R,i} + \lambda_2 \lambda_{1R,i}}, \quad m_{3,i} = \frac{\lambda_{2R,i}}{1 + \lambda_1 c_{a,i}\lambda_{2R,i} + \lambda_2 \lambda_{2R,i}},$$

$$m_{4,i} = \frac{\lambda_{2R,i}}{1 + \lambda_1 \lambda_{2R,i} + \lambda_2 \lambda_{2R,i}}.$$

**General Case 2:** When $\alpha_1$ and $\beta_2$ exist, $\tilde{W}_1$ is an identity matrix multiplied by a constant, i.e., $\tilde{W}_1 = \lambda_1 I_{L_R}$, $\lambda_1 \geq 0$;

while $\tilde{W}_2 = \Lambda_2^{1/2} = diag\{\lambda_{2,1}^{1/2}, \dots, \lambda_{2,L_R}^{1/2}\}$, $\lambda_{2,i} > 0$, $i=1, \dots, L_R$ is a diagonal matrix. The notation in the iterative approach is as follows:

$$\mathbf{max\_\lambda} = \left( {P_R}\big/{d_a \sigma_n^2}, {P_R}\big/{c_{b,1}\sigma_n^2}, \mathrm{L}, {P_R}\big/{c_{b,M}\sigma_n^2}, \mathbf{1}_{L_R - M}^T \right)^T,$$

$$\lambda = (\lambda_1, \lambda_{2,1}, \dots, \lambda_{2,L_R})^T, \qquad \boldsymbol{\mu} = (\mu_1, \mathrm{L}, \mu_{1 \cdot L_2(L_2-1)+1})^T,$$

$$\mathbf{v}^k = \left( v_{\lambda_1}^k, v_{\lambda_{2,1}}^k, \mathrm{L}, v_{\lambda_{2,L_R}}^k, v_{\mu_1}^k, \mathrm{L}, v_{\mu_{L_2(L_2-1)+1}}^k \right)^T, \qquad 1_N = \left( \underbrace{1, \dots, 1}_{N} \right).$$

$$\mathbf{S} = \begin{bmatrix} \mathbf{0}_{L_2(L_2-1)\times 1} & \mathbf{S}_2 \\ d_a & c_{b,1}, \mathrm{L}, c_{b,M}, \mathbf{0}_{1\times(L_R-M)} \end{bmatrix}, \qquad \mathbf{q} = \begin{pmatrix} \mathbf{0}_{L_2(L_2-1)\times 1} \\ {P_R}\big/{\sigma_n^2} \end{pmatrix}, \qquad c_{a,i} = \frac{P_1}{L_1 \sigma_n^2}\lambda_{R1,i} + 1,$$ where

$$c_{b,i} = \frac{P_2}{L_2 \sigma_n^2}\lambda_{R2,i} + 1, \quad i = 1, \mathrm{L}, M, \quad d_a = \sum_{i=1}^M c_{a,i}, \text{ and } M = \min(L_1, L_2, L_R).$$

And
$$\mathbf{S}_2 = \begin{bmatrix} \mathrm{Re}\{\mathbf{s}_2\} \\ \mathrm{Im}\{\mathbf{s}_2\} \end{bmatrix} \in R^{L_2(L_2-1)\times L_R},$$
where Re{·} and Im{·} are the functions which take the real and imaginary parts of the variables, and $\mathbf{s}_2$ comes from the linear equations $\sum_{k=1}^{L_R} \lambda_{2,k} t_{ki}^* t_{kj} = 0, 1 \le i < j \le L_2,$ i.e.,

$$\mathbf{s}_2 = \begin{pmatrix} t_{11}^* t_{12} & t_{21}^* t_{22} & \mathrm{L} & t_{L_R,1}^* t_{L_R,2} \\ t_{11}^* t_{13} & t_{21}^* t_{23} & \mathrm{L} & t_{L_R,1}^* t_{L_R,3} \\ \mathrm{M} & \mathrm{M} & \mathrm{O} & \mathrm{M} \\ t_{11}^* t_{1,L_2} & t_{21}^* t_{2,L_2} & \mathrm{L} & t_{L_R,1}^* t_{L_R,L_2} \\ t_{12}^* t_{13} & t_{22}^* t_{23} & \mathrm{L} & t_{L_R,2}^* t_{L_R,3} \\ \mathrm{M} & \mathrm{M} & \mathrm{O} & \mathrm{M} \\ t_{12}^* t_{1,L_2} & t_{22}^* t_{2,L_2} & \mathrm{L} & t_{L_R,2}^* t_{L_R,L_2} \\ \mathrm{M} & \mathrm{M} & \mathrm{O} & \mathrm{M} \\ t_{1,L_2-1}^* t_{1,L_2} & t_{2,L_2-1}^* t_{2,L_2} & \mathrm{L} & t_{L_R,L_2-1}^* t_{L_R,L_2} \end{pmatrix} \in C^{\frac{L_2(L_2-1)}{2}\times L_R}.$$

$$\nabla^2 f_2(\lambda^k) = \begin{pmatrix} \dfrac{\partial^2 f_2(\lambda^k)}{\partial \lambda_1^2} & \dfrac{\partial^2 f_2(\lambda^k)}{\partial \lambda_1 \partial \lambda_{2,1}} & \mathrm{L} & \dfrac{\partial^2 f_2(\lambda^k)}{\partial \lambda_1 \partial \lambda_{2,L_R}} \\[2ex] \dfrac{\partial^2 f_2(\lambda^k)}{\partial \lambda_1 \partial \lambda_{2,1}} & \dfrac{\partial^2 f_2(\lambda^k)}{\partial \lambda_{2,1}^2} & \mathrm{L} & \dfrac{\partial^2 f_2(\lambda^k)}{\partial \lambda_{2,1} \partial \lambda_{2,L_R}} \\[2ex] \mathrm{M} & \mathrm{M} & \mathrm{O} & \mathrm{M} \\[1ex] \dfrac{\partial^2 f_2(\lambda^k)}{\partial \lambda_1 \partial \lambda_{2,L_R}} & \dfrac{\partial^2 f_2(\lambda^k)}{\partial \lambda_{2,1} \partial \lambda_{2,L_R}} & \mathrm{L} & \dfrac{\partial^2 f_2(\lambda^k)}{\partial \lambda_{2,L_R}^2} \end{pmatrix}$$

and, where
$$\frac{\partial f_2(\lambda)}{\partial \lambda_1} = \sum_{i=1}^M \left( -m_{1,i} + m_{2,i} - c_{a,i} m_{3,i} + m_{4,i} \right),$$

$$\frac{\partial f_2(\lambda)}{\partial \lambda_{2,j}} = \begin{cases} -c_{b,j} m_{1,j} + m_{2,j} + \sum_{i=1}^M |t_{ji}|^2 \left( -m_{3,i} + m_{4,i} \right), & 1 \le j \le M \\[3ex] \sum_{i=1}^M |t_{ji}|^2 \left( -m_{3,i} + m_{4,i} \right), & M+1 \le j \le L_R \end{cases},$$

$$\frac{\partial^2 f_2(\lambda)}{\partial \lambda_1^2} = \sum_{i=1}^M \left( m_{1,i}^2 - m_{2,i}^2 + c_{a,i}^2 m_{3,i}^2 - m_{4,i}^2 \right),$$

$$\frac{\partial^2 f_2(\lambda)}{\partial \lambda_1 \partial \lambda_{2,j}} = \begin{cases} c_{b,j}m_{1,j}^2 - m_{2,j}^2 + \sum_{i=1}^{M}\left|t_{ji}\right|^2\left(c_{a,i}m_{3,i}^2 - m_{4,i}^2\right), 1 \le j \le M \\ \sum_{i=1}^{M}\left|t_{ji}\right|^2\left(c_{a,i}m_{3,i}^2 - m_{4,i}^2\right), M+1 \le j \le L_R \end{cases},$$

$$\frac{\partial^2 f_2(\lambda)}{\partial \lambda_{2,j}^2} = \begin{cases} c_{b,j}^2 m_{1,j}^2 - m_{2,j}^2 + \sum_{i=1}^{M}\left|t_{ji}\right|^4\left(m_{3,i}^2 - m_{4,i}^2\right), 1 \le j \le M \\ \sum_{i=1}^{M}\left|t_{ji}\right|^4\left(m_{3,i}^2 - m_{4,i}^2\right), M+1 \le j \le L_R \end{cases},$$

$$\frac{\partial^2 f_2(\lambda)}{\partial \lambda_{2,j}\partial \lambda_{2,l}} = \sum_{i=1}^{M}\left|t_{ji}\right|^2\left|t_{li}\right|^2\left(m_{3,i}^2 - m_{4,i}^2\right), 1 \le j,l \le L_R, j \ne l,$$

$$m_{1,i} = \frac{\lambda_{1R,i}}{1+\lambda_1\lambda_{1R,i}+\lambda_2 c_{b,i}\lambda_{1R,i}}, \quad m_{2,i} = \frac{\lambda_{1R,i}}{1+\lambda_1\lambda_{1R,i}+\lambda_2\lambda_{1R,i}},$$

$$m_{3,i} = \frac{\lambda_{2R,i}}{1+\lambda_1 c_{a,i}\lambda_{2R,i}+\sum_{k=1}^{L_R}\lambda_{2,k}\left|t_{ki}\right|^2\lambda_{2R,i}}, \quad m_{4,i} = \frac{\lambda_{2R,i}}{1+\lambda_1\lambda_{2R,i}+\sum_{k=1}^{L_R}\lambda_{2,k}\left|t_{ki}\right|^2\lambda_{2R,i}}.$$

**General Case 3:** When $\beta_1$ and $\beta_2$ exist, both $\widetilde{W}_1 = \Lambda_1^{1/2} = diag\left\{\lambda_{1,1}^{1/2}, L, \lambda_{1,L_R}^{1/2}\right\}$,

$\lambda_{1,i} \ge 0, i=1, L, L_R$, and $\widetilde{W}_2 = \Lambda_2^{1/2} = diag\left\{\lambda_{2,1}^{1/2}, L, \lambda_{2,L_R}^{1/2}\right\}$, $\lambda_{2,i} \ge 0, i=1, L, L_R$, are diagonal matrices. The notation in the iterative approach is as follows:

$$\lambda = \left(\lambda_{1,1}, L \ \lambda_{1,N_R}, \lambda_{2,1}, L \ \lambda_{2,L_R}\right)^T, \quad \mu = \left(\mu_1, L, \mu_{L_2(L_2-1)+1}\right)^T,$$

$$\mathbf{max\_\lambda} = \left(P_R\!\big/\!c_{a,1}\sigma_n^2, L, P_R\!\big/\!c_{a,M}\sigma_n^2, \mathbf{1}_{L_R-M}^T, P_R\!\big/\!c_{b,1}\sigma_n^2, L, P_R\!\big/\!c_{b,M}\sigma_n^2, \mathbf{1}_{L_R-M}^T\right)^T, \quad \mathbf{1}_N = \left(\underbrace{1,\ldots,1}_{N}\right),$$

and

$$\mathbf{v}^k = \left(v_{\lambda_{1,1}}^k, L, v_{\lambda_{1,L_R}}^k, v_{\lambda_{2,1}}^k, L, v_{\lambda_{2,L_R}}^k, v_{\mu_1}^k, L, v_{\mu_{L_2(L_2-1)+1}}^k\right)^T.$$

$$\mathbf{S} = \begin{bmatrix} \mathbf{S}_1 & \mathbf{0}_{L_1(L_1-1)\times 1} \\ \mathbf{0}_{L_2(L_2-1)\times 1} & \mathbf{S}_2 \\ c_{a,1}, L, c_{a,M}, \mathbf{0}_{1\times(L_R-M)} & c_{b,1}, L, c_{b,M}, \mathbf{0}_{1\times(L_R-M)} \end{bmatrix}, \quad \mathbf{q} = \begin{pmatrix} \mathbf{0}_{\left[L_1(L_1-1)+L_2(L_2-1)\right]\times 1} \\ P_R\!\big/\!\sigma_n^2 \end{pmatrix}, \quad \text{where}$$

$c_{a,i} = \frac{P_1}{L_1\sigma_n^2}\lambda_{R1,i}+1$, $c_{b,i} = \frac{P_2}{L_2\sigma_n^2}\lambda_{R2,i}+1$, $i = 1, L, M$, and $M = \min(L_1,L_2,L_R)$.

$$S_1 = \begin{bmatrix} \operatorname{Re}\{s_1\} \\ \operatorname{Im}\{s_1\} \end{bmatrix} \in R^{L_1(L_1-1)\times L_R} \qquad S_2 = \begin{bmatrix} \operatorname{Re}\{s_2\} \\ \operatorname{Im}\{s_2\} \end{bmatrix} \in R^{L_2(L_2-1)\times L_R},$$

And and where Re{·}and Im{·} are the functions which take the real and imaginary part of the variables, $s_1$ and $s_2$ come from the linear equations

$$\sum_{k=1}^{L_R} \lambda_{1,k} t_{ik} t_{jk}^* = 0, 1 \le i < j \le L_1, \qquad \sum_{k=1}^{L_R} \lambda_{2,k} t_{ki}^* t_{kj} = 0, 1 \le i < j \le L_2,$$

and respectively, i.e.,

$$s_1 = \begin{pmatrix} t_{11}t_{21}^* & t_{12}t_{22}^* & L & t_{1,L_R}t_{2,L_R}^* \\ t_{11}t_{31}^* & t_{12}t_{32}^* & L & t_{1,L_R}t_{3,L_R}^* \\ M & M & O & M \\ t_{11}t_{L_1,1}^* & t_{12}t_{L_1,2}^* & L & t_{1,L_R}t_{L_1,L_R}^* \\ t_{21}t_{31}^* & t_{22}t_{32}^* & L & t_{2,L_R}t_{3,L_R}^* \\ M & M & O & M \\ t_{21}t_{L_1,1}^* & t_{22}t_{L_1,2}^* & L & t_{2,L_R}t_{L_1,L_R}^* \\ M & M & O & M \\ t_{L_1-1,1}t_{L_1,1}^* & t_{L_1-1,2}t_{L_1,2}^* & L & t_{L_1-1,L_R}t_{L_1,L_R}^* \end{pmatrix} \in C^{\frac{L_1(L_1-1)}{2}\times L_R},$$

and

$$s_2 = \begin{pmatrix} t_{11}^*t_{12} & t_{21}^*t_{22} & L & t_{L_R,1}^*t_{L_R,2} \\ t_{11}^*t_{13} & t_{21}^*t_{23} & L & t_{L_R,1}^*t_{L_R,3} \\ M & M & O & M \\ t_{11}^*t_{1,L_2} & t_{21}^*t_{2,L_2} & L & t_{L_R,1}^*t_{L_R,L_2} \\ t_{12}^*t_{13} & t_{22}^*t_{23} & L & t_{L_R,2}^*t_{L_R,3} \\ M & M & O & M \\ t_{12}^*t_{1,L_2} & t_{22}^*t_{2,L_2} & L & t_{L_R,2}^*t_{L_R,N_2} \\ M & M & O & M \\ t_{1,L_2-1}^*t_{1,L_2} & t_{2,L_2-1}^*t_{2,L_2} & L & t_{L_R,L_2-1}^*t_{L_R,L_2} \end{pmatrix} \in C^{\frac{L_2(L_2-1)}{2}\times L_R}.$$

$$\nabla^2 f_2\left(\boldsymbol{\lambda}^k\right) = \begin{pmatrix} \dfrac{\partial^2 f_2\left(\boldsymbol{\lambda}^k\right)}{\partial \lambda_{1,1}^2} & \mathrm{L} & \dfrac{\partial^2 f_2\left(\boldsymbol{\lambda}^k\right)}{\partial \lambda_{1,1}\partial \lambda_{1,L_R}} & \dfrac{\partial^2 f_2\left(\boldsymbol{\lambda}^k\right)}{\partial \lambda_{1,1}\partial \lambda_{2,1}} & \mathrm{L} & \dfrac{\partial^2 f_2\left(\boldsymbol{\lambda}^k\right)}{\partial \lambda_{1,1}\partial \lambda_{2,L_R}} \\ \mathrm{M} & \mathrm{O} & \mathrm{M} & \mathrm{M} & \mathrm{O} & \mathrm{M} \\ \dfrac{\partial^2 f_2\left(\boldsymbol{\lambda}^k\right)}{\partial \lambda_{1,1}\partial \lambda_{1,L_R}} & \mathrm{L} & \dfrac{\partial^2 f_2\left(\boldsymbol{\lambda}^k\right)}{\partial \lambda_{1,L_R}^2} & \dfrac{\partial^2 f_2\left(\boldsymbol{\lambda}^k\right)}{\partial \lambda_{2,1}\partial \lambda_{1,L_R}} & \mathrm{L} & \dfrac{\partial^2 f_2\left(\boldsymbol{\lambda}^k\right)}{\partial \lambda_{1,L_R}\partial \lambda_{2,L_R}} \\ \dfrac{\partial^2 f_2\left(\boldsymbol{\lambda}^k\right)}{\partial \lambda_{1,1}\partial \lambda_{2,1}} & \mathrm{L} & \dfrac{\partial^2 f_2\left(\boldsymbol{\lambda}^k\right)}{\partial \lambda_{2,1}\partial \lambda_{1,L_R}} & \dfrac{\partial^2 f_2\left(\boldsymbol{\lambda}^k\right)}{\partial \lambda_{2,1}^2} & \mathrm{L} & \dfrac{\partial^2 f_2\left(\boldsymbol{\lambda}^k\right)}{\partial \lambda_{2,1}\partial \lambda_{2,L_R}} \\ \mathrm{M} & \mathrm{O} & \mathrm{M} & \mathrm{M} & \mathrm{O} & \mathrm{M} \\ \dfrac{\partial^2 f_2\left(\boldsymbol{\lambda}^k\right)}{\partial \lambda_{1,1}\partial \lambda_{2,L_R}} & \mathrm{L} & \dfrac{\partial^2 f_2\left(\boldsymbol{\lambda}^k\right)}{\partial \lambda_{1,L_R}\partial \lambda_{2,L_R}} & \dfrac{\partial^2 f_2\left(\boldsymbol{\lambda}^k\right)}{\partial \lambda_{2,1}\partial \lambda_{2,L_R}} & \mathrm{L} & \dfrac{\partial^2 f_2\left(\boldsymbol{\lambda}^k\right)}{\partial \lambda_{2,L_R}^2} \end{pmatrix},$$

and

$$\nabla f_2\left(\boldsymbol{\lambda}^k\right) = \left( \dfrac{\partial f_2\left(\boldsymbol{\lambda}^k\right)}{\partial \lambda_{1,1}} \quad \mathrm{L} \quad \dfrac{\partial f_2\left(\boldsymbol{\lambda}^k\right)}{\partial \lambda_{1,L_R}} \quad \dfrac{\partial f_2\left(\boldsymbol{\lambda}^k\right)}{\partial \lambda_{2,1}} \quad \mathrm{L} \quad \dfrac{\partial f_2\left(\boldsymbol{\lambda}^k\right)}{\partial \lambda_{2,L_R}} \right)^T,$$

$$\frac{\partial f_2\left(\boldsymbol{\lambda}\right)}{\partial \lambda_{1,j}} = \begin{cases} \displaystyle\sum_{i=1}^{M}\left|t_{ij}\right|^2\left(-m_{1,i}+m_{2,i}\right)-c_{a,j}m_{3,j}+m_{4,j}, & 1\le j\le M \\[2mm] \displaystyle\sum_{i=1}^{M}\left|t_{ij}\right|^2\left(-m_{1,i}+m_{2,i}\right), & M+1\le j\le L_R \end{cases},$$

$$\frac{\partial f_2\left(\boldsymbol{\lambda}\right)}{\partial \lambda_{2,j}} = \begin{cases} -c_{b,j}m_{1,j}+m_{2,j}+\displaystyle\sum_{i=1}^{M}\left|t_{ji}\right|^2\left(-m_{3,i}+m_{4,i}\right), & 1\le j\le M \\[2mm] \displaystyle\sum_{i=1}^{M}\left|t_{ji}\right|^2\left(-m_{3,i}+m_{4,i}\right), & M+1\le j\le L_R \end{cases},$$

$$\frac{\partial^2 f_2\left(\boldsymbol{\lambda}\right)}{\partial \lambda_{1,j}^2} = \begin{cases} \displaystyle\sum_{i=1}^{M}\left|t_{ij}\right|^2\left(m_{1,i}^2-m_{2,i}^2\right)+c_{a,j}^2 m_{3,j}^2-m_{4,j}^2, & 1\le j\le M \\[2mm] \displaystyle\sum_{i=1}^{M}\left|t_{ij}\right|^2\left(m_{1,i}^2-m_{2,i}^2\right), & M+1\le j\le L_R \end{cases},$$

$$\frac{\partial^2 f_2\left(\boldsymbol{\lambda}\right)}{\partial \lambda_{1,j}\partial \lambda_{1,l}} = \sum_{i=1}^{M}\left|t_{ij}\right|^2\left|t_{il}\right|^2\left(m_{1,i}^2-m_{2,i}^2\right), 1\le j,l\le L_R, j\neq l,$$

$$\frac{\partial^2 f_2(\lambda)}{\partial \lambda_{2,j}^2} = \begin{cases} c_{b,j}^2 m_{1,j}^2 - m_{2,j}^2 + \sum_{i=1}^{M} |t_{ji}|^4 \left( m_{3,i}^2 - m_{4,i}^2 \right), 1 \le j \le M \\ \sum_{i=1}^{M} |t_{ji}|^4 \left( m_{3,i}^2 - m_{4,i}^2 \right), M+1 \le j \le L_R \end{cases},$$

$$\frac{\partial^2 f_2(\lambda)}{\partial \lambda_{2,j} \partial \lambda_{2,l}} = \sum_{i=1}^{M} |t_{ji}|^2 |t_{li}|^2 \left( m_{3,i}^2 - m_{4,i}^2 \right), 1 \le j, l \le L_R,$$

$$\frac{\partial^2 f_2(\lambda)}{\partial \lambda_{1,j} \partial \lambda_{2,l}} = \begin{cases} |t_{lj}|^2 \left( c_{b,i} m_{1,i}^2 - m_{2,i}^2 + c_{a,i} m_{3,i}^2 - m_{4,i}^2 \right), 1 \le j, l \le M \\ |t_{lj}|^2 \left( c_{a,i} m_{3,i}^2 - m_{4,i}^2 \right), 1 \le j \le M, M+1 \le l \le L_R \\ |t_{lj}|^2 \left( c_{b,i} m_{1,i}^2 - m_{2,i}^2 \right), M+1 \le j \le N_R, 1 \le l \le M, \\ 0, M+1 \le j, l \le L_R \end{cases},$$

$$m_{1,i} = \frac{\lambda_{1R,i}}{1+\sum_{k=1}^{L_R} \lambda_{1,k} |t_{ik}|^2 \lambda_{1R,i} + \lambda_{2,i} c_{b,i} \lambda_{1R,i}}, \qquad m_{2,i} = \frac{\lambda_{1R,i}}{1+\sum_{k=1}^{L_R} \lambda_{1,k} |t_{ik}|^2 \lambda_{1R,i} + \lambda_{2,i} \lambda_{1R,i}},$$

$$m_{3,i} = \frac{\lambda_{2R,i}}{1+\lambda_1 c_{a,i} \lambda_{2R,i} + \sum_{k=1}^{L_R} \lambda_{2,k} |t_{ki}|^2 \lambda_{2R,i}}, \quad m_{4,i} = \frac{\lambda_{2R,i}}{1+\lambda_1 \lambda_{2R,i} + \sum_{k=1}^{L_R} \lambda_{2,k} |t_{ki}|^2 \lambda_{2R,i}}.$$

$$M_1 = H_{R2} \left[ I_{L_2} + H_{12}^H \left( I_{L_1} + \frac{P_2}{L_2 \sigma_n^2} H_{12} H_{12}^H \right)^{-1} \frac{P_2}{L_2 \sigma_n^2} H_{12} \right] H_{R2}^H,$$

Denote                                                                                                           and

$$M_2 = H_{R1} \left[ I_{L_1} + H_{21}^H \left( I_{L_2} + \frac{P_1}{L_1 \sigma_n^2} H_{21} H_{21}^H \right)^{-1} \frac{P_1}{L_1 \sigma_n^2} H_{21} \right] H_{R1}^H.$$

They are both Hermitian, and

$M_1 = U_{M_1} \Lambda_{M_1} U_{M_1}^H$, and $M_2 = U_{M_2} \Lambda_{M_2} U_{M_2}^H$, with $U_{M1}, U_{M2} \in C^{L_R \times L_R}$ are unitary matrices, and $\Lambda_{M_1} = diag\{\lambda_{M_1,i}\}$ and $\Lambda_{M2} = diag\{\lambda_{M2,i}\}$ are diagonal matrices.

Let $W_1 = V_{2R} \tilde{W}_1 U_{M_2}^H$ and $W_2 = V_{1R} \tilde{W}_2 U_{M_1}^H$. The problem to determine $\tilde{W}_1, \tilde{W}_2 \in C^{L_R \times L_R}$, when the CSI of the direct links between Node$_1$ and Node$_2$ is available, the RN is the same form as above when the CSI for the direct links between Node$_1$ and Node$_2$ is not available and the iterative approach of finding the solution is almost the same as the three cases above by just replacing $\lambda_{R2,i}$ and $\lambda_{R1,i}$ by $\lambda_{M1,i}$ and $\lambda_{M2,i}$, respectively.

In the design problem, both nodes (source and destination) send out (transmit, communicate, forward) training sequences to the RN, so that the RN can estimate the incoming channels. The RN also needs to send out (transmit, communicate, forward) training sequence(s) for the nodes (source and destination) to estimate the channels (links) from the RN to each of them and also transmit (send out, forward, communicate) information regarding the pre-coding matrices the RN uses.

Two basic data frame structures are proposed for use in the present invention:

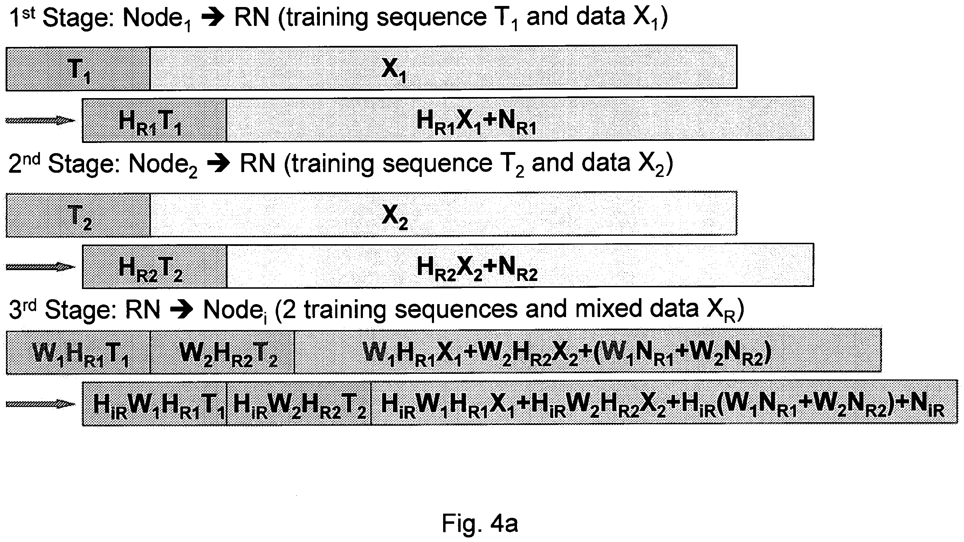

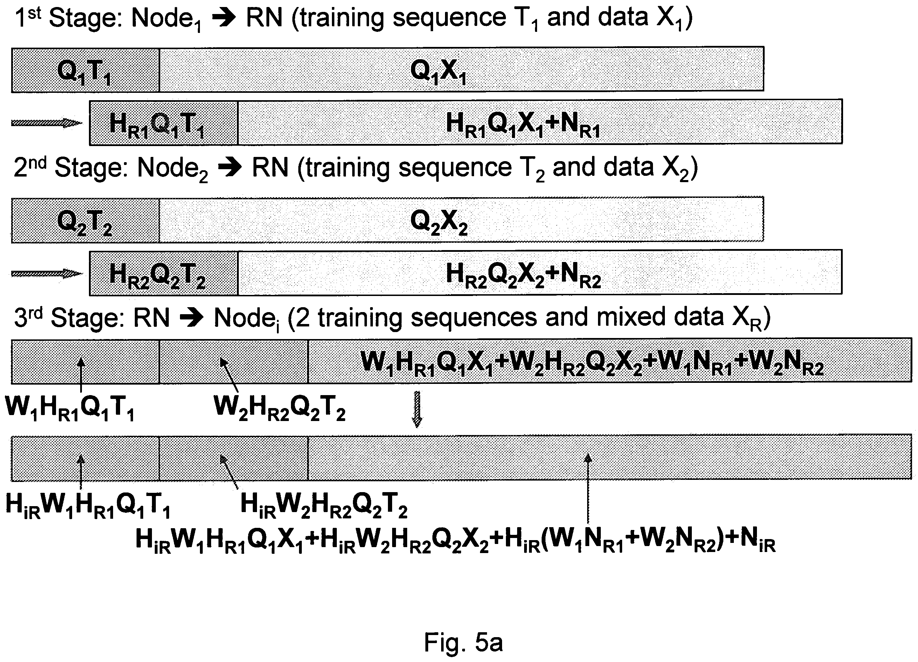

(1) The RN applies the pre-coding matrices to the training sequences it receives and forwards them, as in Fig. 4(a) and Fig. 5(a).

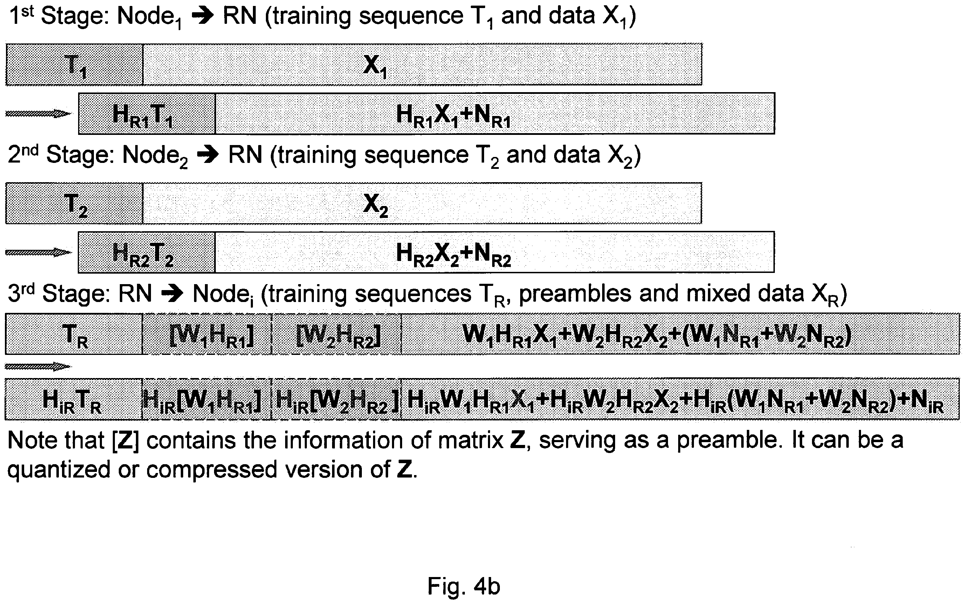

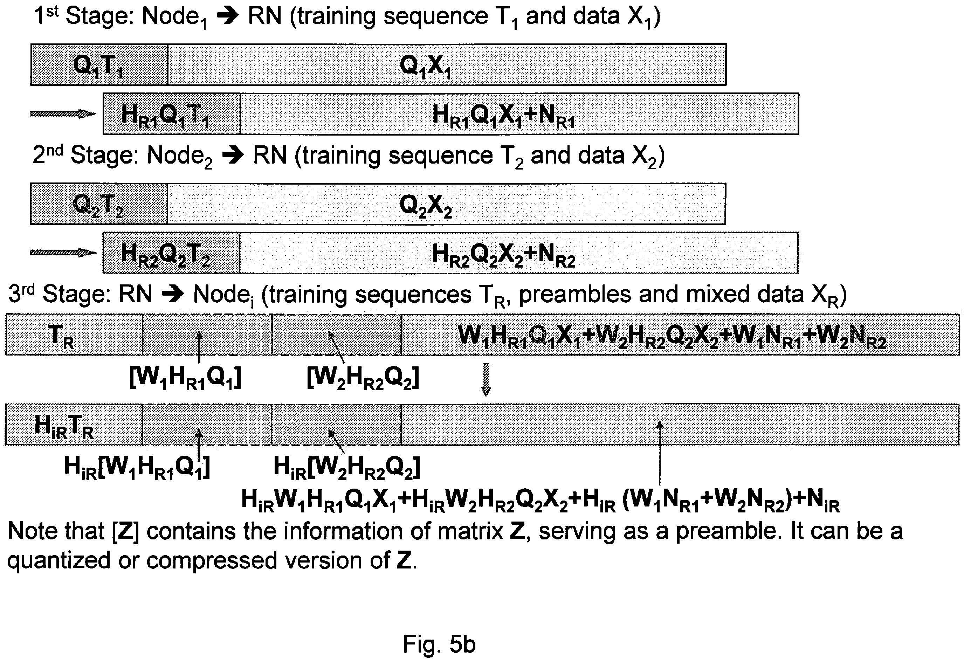

(2) The RN estimates the incoming channel matrices, multiplies them with the pre-coding matrices, quantizes the resulting matrices, and feeds them back. It also sends out its own training sequence to the nodes (source and destination) to estimate the channel state (channel conditions) from the RN to them, as in Fig. 4(b) and Fig. 5(b). Still there are other channel estimations that need to be done, such as the CSI of the outgoing channels from RN to nodes (source and destination) at the RN and the CSI of the direct links at the RN. They are done by other frames, such as control frames, etc.

Referring again to Fig. 3a, which is a block diagram of the operation of an exemplary embodiment of the transmission side of the Network-Coded Amplify-and-Forward relaying scheme of the present invention. Data $S_1$ is transmitted (communicated) from $Node_1$ as signal $X_1$ to the RN in the first time slot and data $S_2$ is transmitted (communicated) from $Node_2$ as signal $X_2$ to the RN in the second time slot. The RN then pre-codes, mixes (combines) and multicasts (broadcasts) the pre-coded mixed data ($X_R$) for receipt by both $Node_1$ and $Node_2$. It goes without saying that the pre-coded mixed (combined) data is modulated.

Referring again to Fig. 3b, which is a block diagram of the operation of an exemplary embodiment of the reception side of the Network-Coded Amplify-and-Forward relaying scheme of the present invention from the perspective of $Node_1$. $Node_1$ receives signal $Y_{12}$ from $Node_2$ and signal $Y_{1R}$ from the RN and performs joint network and channel decoding. It goes without saying that the decoded data is demodulated.

Referring again to Fig. 3c, which is a block diagram of the operation of an exemplary embodiment of the reception side of the Network-Coded Amplify-and-Forward relaying scheme of the present invention from the perspective of $Node_2$. $Node_2$ receives signal $Y_{21}$ from $Node_1$ and signal $Y_{2R}$ from the RN and performs joint network and channel decoding. It goes without saying that the decoded data is demodulated.

That is, from the standpoint (perspective) of a node that holds (possesses) the transmission opportunity (TXOP), the node includes means for transmitting sending out, communicating) a first signal having data and means for receiving a second signal. The transmitting and receiving means may be a transceiver or a separate transmitter and a separate receiver or any equivalent means. The node also has means for jointly decoding the second signal by removing (subtracting off) a training sequence and the first signal. Optionally, the node also includes means for decoding the second signal by accounting for the application of a first beamforming matrix to the data of the first signal and the application of a second beamforming matrix to the data of the second signal.

From the standpoint (perspective) of a relay node (RN), the RN includes means for receiving a first signal in a first time slot of a first channel, means for receiving a second signal in a second time slot of a second channel, means for determining a first pre-coding matrix, means for determining a second pre-coding matrix, wherein the first pre-coding matrix and the second pre-coding matrix maximize a joint channel capacity of the first channel and second channel respectively, means for applying the first pre-coding matrix to first data, means for applying the second pre-coding matrix to second data, means for generating a third signal by mixing (combining) the pre-coded first data and the pre-coded second data and means for transmitting the third signal. The transmitting and receiving means may be a transceiver or a separate transmitter and a separate receiver or any equivalent means. The RN also includes means for generating a first estimated channel matrix for the first channel and a second estimated channel matrix for the second channel, means for inserting the first pre-coding matrix times the first estimated channel matrix and the second pre-coding matrix times the second estimated channel matrix between a training sequence of the third signal and means for quantizing the first pre-coding matrix times the first estimated channel matrix and means for quantizing the second pre-coding matrix times the second estimated channel matrix before the means for inserting is executed. Optionally, the RN also includes means for determining a first beamforming matrix, means for determining a second beamforming matrix and means for applying the first beamforming matrix to the first data and applying the second beamforming matrix to the second data before generating the third signal. The RN also coded matrix times the first estimated channel matrix and means for applying the second beamforming matrix to the second pre-coded matrix times the second estimated channel matrix before inserting the first pre-coded matrix times the first estimated channel matrix and the second pre-coded matrix times the second estimated channel matrix between the training sequence of the third signal.

Referring again to Fig. 4, which is collectively simplified exemplary frame structures for the Network-Coded Amplify-and-Forward relaying scheme without beamforming at source nodes of the present invention. Fig. 4a shows the case where training sequences are sent from the source nodes. The RN sends out training sequences but the training sequences sent by the RN are effectively the training sequences that the RN received from $Node_1$ and $Node_2$ copied and returned to the source nodes ($Node_1$ and $Node_2$). In the third stage the RN transmits the two training sequences and the mixed data $X_R$ to $Node_i$. Pre-coding matrices are applied to both the training sequences and to the mixed data $X_R$. Pre-coding matrix $W_1$ is applied to $T_1$ (the first training sequence) and pre-coding matrix $W_2$ is applied to $T_2$ (the second training sequence). Pre-coding matrix $W_1$ is also applied to $H_{R1}X_1$ of the mixed signal $X_R$ and $W_2$ is applied to

$H_{R2}X_2$ of the mixed signal $X_R$. Note that $H_{R1}X_1$ is the desired signal that the RN received from Node$_1$ (Node$_1$ sent $X_1$). Also note that $H_{R2}X_2$ is the desired signal that the RN received from Node$_2$ (Node$_2$ sent $X_2$). In Fig. 4b, each node sends out (transmits, communicates) its own training sequence and the RN also sends out (transmits, communicates) pre-coding matrices $W_1$ and $W_2$ in addition to the mixed data $X_R$. No pre-coding matrix is applied to the training sequence $T_R$ sent out (transmitted, communicated) by the RN.

Referring again to Fig. 5, which is collectively simplified exemplary frame structures for the Network-Coded Amplify-and-Forward relaying scheme with beamforming at source nodes of the present invention. Fig. 5a shows the case where training sequences are sent from the source nodes. The RN sends out training sequences but the training sequences sent by the RN are effectively the training sequences that the RN received from Node$_1$ and Node$_2$ copied and returned to the source nodes (Node$_1$ and Node$_2$). In the third stage the RN transmits the two training sequences and the mixed data $X_R$ to Node$_i$. Pre-coding matrices are applied to both the training sequences and to the mixed data $X_R$. Pre-coding matrix $W_1$ is applied to $T_1$ (the first training sequence) and pre-coding matrix $W_2$ is applied to $T_2$ (the second training sequence). Pre-coding matrix $W_1$ is also applied to $H_{R1}X_1$ of the mixed signal $X_R$ and W2 is applied to $H_{R2}X_2$ of the mixed signal $X_R$. Note that $H_{R1}X_1$ is the desired signal that the RN received from Node$_1$ (Node$_1$ sent $X_1$). Also note that $H_{R2}X_2$ is the desired signal that the RN received from Node$_2$ (Node$_2$ sent $X_2$). In addition to applying the pre-coding matrices to the training sequences and the mixed data, beamforming matrix $Q_1$ is applied to training sequence $T_1$ and beamforming matrix $Q_2$ is applied to training sequence $T_2$. Beamforming matrix $Q_1$ is also applied to $X_1$ of the mixed signal $X_R$ and beamforming matrix $Q_2$ is applied to $X_2$ of mixed signal $X_R$. In Fig. 5b, each node sends out (transmits, communicates) its own training sequence and the RN also sends out (transmits, communicates) pre-coding matrices $W_1$ and $W_2$ in addition to the mixed signal $X_R$. No pre-coding matrix is applied to the training sequence TR sent out (transmitted, communicated) by the RN. Pre-coding matrices are applied to the mixed signal $X_R$. Pre-coding matrix $W_1$ is also applied to $H_{R1}X_1$ of the mixed signal $X_R$ and W2 is applied to $H_{R2}X_2$ of the mixed signal $X_R$. Note that $H_{R1}X_1$ is the desired signal that the RN received from Node$_1$ (Node$_1$ sent $X_1$). Also note that $H_{R2}X_2$ is the desired signal that the RN received from Node$_2$ (Node$_2$ sent $X_2$). In addition to applying the pre-coding matrices to mixed signal, beamforming matrix $Q_1$ is also applied to $X_1$ of the mixed signal $X_R$ and beamforming matrix $Q_2$ is applied to $X_2$ of mixed signal $X_R$.

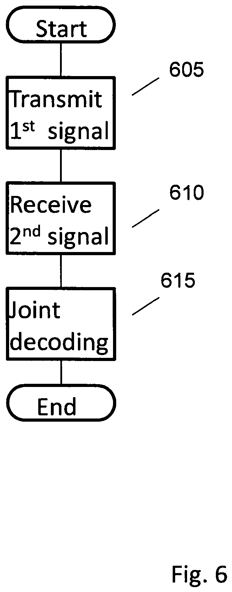

Referring to Fig. 6, which is a flowchart of an exemplary embodiment of the present invention from the perspective of a node (source and destination), at 605 the node transmits a first signal (message) including data. At 610, the node receives a second signal (message) including data. At 615, the node jointly decodes the second signal (message) which was a combined signal (message) including both the first data transmitted by the node and third data transmitted by another node (destination node for the first data and source node for the third data) by removing (subtracting out) the first data and the training sequence since both the training sequence and the first data are known as well as the pre-coding matrix that was applied to the first data.

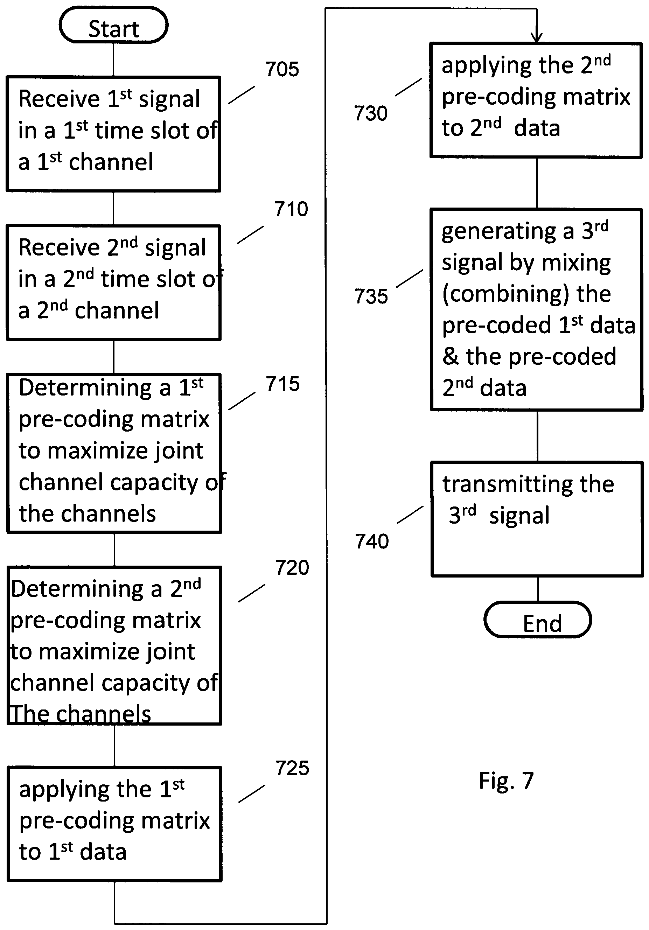

Referring to Fig. 7, which is a flowchart of an exemplary embodiment of the present invention from the perspective of a relay node, at 705 the relay node receives a first signal (message) in a first time slot of a first channel. The first signal includes first data and a first training sequence. At 710 the relay node receives a second signal (message) in a second time slot of a second channel. The second signal includes second data and a second training sequence. At 715 the relay node determines a first pre-coding matrix to maximize the joint capacity of the channels. At 720 the relay node determines a second pre-coding matrix to maximize the joint capacity of the channels. At 725 the relay node applies the first pre-coding matrix to first data. At 730 the relay node applies the second pre-coding matrix to second data. At 735 the relay node generates a third signal by mixing (combining) the pre-coded first data and the pre-coded second data. At 740 the relay node transmits (multicasts, broadcasts, communicates, sends out) the third data over (on) both the first and the second channels.

It is to be understood that the present invention may be implemented in various forms of hardware, software, firmware, special purpose processors, or a combination thereof. Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

**Claims**

1. A method for operation of a bi-directional communication system making use of a relay node, said method comprising:

   receiving, by said relay node, a first signal including first data in a first time slot of a first channel;
   receiving, by said relay node, a second signal including second data in a second time slot of a second channel, wherein said first signal and said second signal are exchanged between a source node and a destination node communicating with each other via said relay node;
   determining, by said relay node, a first pre-coding matrix;

   **characterized in that** the method further comprises

   determining, by said relay node, a second pre-coding matrix;
   applying, by said relay node, said first pre-coding matrix to said first data to produce pre-coded first data;
   applying, by said relay node, said second pre-coding matrix to said second data to produce pre-coded second data;
   generating, by said relay node, a third signal by combining said pre-coded first data and said pre-coded second data; and
   transmitting, by said relay node, said third signal on said first channel and said second channel.

2. The method according to claim 1, wherein said third signal further comprises a training sequence prepended to said third signal, wherein said training sequence includes a first training sequence and a second training sequence, said first training sequence is for said first channel and said second training sequence is for said second channel.

3. The method according to claim 2, further comprising generating, by said relay node, a first estimated channel matrix for said first channel and a second estimated channel matrix for said second channel.

4. The method according to claim 3, further comprising inserting, by said relay node, said first pre-coding matrix times said first estimated channel matrix and said second pre-coding matrix times said second estimated channel matrix between said training sequence of said third signal.

5. The method according to claim 4, further comprising quantizing, by said relay node, said first pre-coding matrix times said first estimated channel matrix and quantizing said second pre-coding matrix times said second estimated channel matrix before said insertion, wherein said first signal includes said a first training sequence and data, and wherein said second signal includes said a second training sequence and data.

6. The method according to claim 1, further comprising:

   determining, by said relay node, a first beamforming matrix;
   determining, by said relay node, a second beamforming matrix; and
   applying, by said relay node, said first beamforming matrix to said first data and applying said second beamforming matrix to said second data before generating said third signal.

7. The method according to claim 6, further comprising applying, by said relay node, said first beamforming matrix to said first pre-coded matrix times said first estimated channel matrix and applying said second beamforming matrix to said second pre-coded matrix times said second estimated channel matrix before inserting said first pre-coded matrix times said first estimated channel matrix and said second pre-coded matrix times said second estimated channel matrix between said training sequence of said third signal.

8. The method according to claim 1, wherein said first channel and said second channel are orthogonal, and further wherein said second time slot is a reverse direction granted by a node which used said first time slot.

9. A relay node of a bi-directional communications system, the relay node comprising: rising:

   means for receiving a first signal including first data in a first time slot of a first channel;
   means for receiving a second signal including second data in a second time slot of a second channel, wherein said first signal and said second signal are exchanged between a source node and a destination node communicating with each other via said relay node;

means for determining a first pre-coding matrix;

**characterized in that** the relay node further comprises

means for determining a second pre-coding matrix;
means for applying said first pre-coding matrix to said first data to produce pre-coded first data;
means for applying said second pre-coding matrix to said second data to produce second pre-coded data;
means for generating a third signal by combining said pre-coded first data and said pre-coded second data; and
means for transmitting said third signal on said first channel and on said second channel.

10. The apparatus according to claim 9, wherein said third signal further comprises a training sequence prepended to said third signal, wherein said training sequence includes a first training sequence and a second training sequence, said first training sequence is for said first channel and said second training sequence is for said second channel.

11. The apparatus according to claim 9 or 10, further comprising means for implementing the method according to anyone of claims 3 to 8.

12. A method, said method comprising:

transmitting a first signal, wherein said first signal includes first data;
receiving a second signal, wherein said second signal includes pre-coded data generated by applying a first pre-coding matrix to said first data and applying a second pre-coding matrix to third data, said first pre-coding matrix and said second pre-coding matrix having been determined by a relay node;

**characterized in that** the method further comprises

joint decoding said third data by subtracting from said second signal, a signal including said first-pre-coding matrix applied to said first data, said first pre-coding matrix being known.

13. The method according to claim 12, wherein a first beamforming matrix was applied to said first pre-coding matrix and said first data and a second beamforming matrix was applied to said second pre-coding matrix and said third data.

14. An apparatus comprising:

means for transmitting a first signal, wherein said first signal includes first data;
means for receiving a second signal, wherein said second signal includes pre-coded data generated by applying a first pre-coding matrix to said first data and applying a second pre-coding matrix to third data, said first pre-coding matrix and said second pre-coding matrix having been determined by a relay node;

**characterized in that** the apparatus further comprises

means for jointly decoding said third data by subtracting
from said second signal, a signal including said first-pre-coding matrix applied to said first data, said first pre-coding matrix being known.

15. The apparatus according to claim 14, wherein a first beamforming matrix was applied to said first pre-coding matrix and said first data and a second beamforming matrix was applied to said second pre-coding matrix and said third data.

**Patentansprüche**

1. Verfahren für den Betrieb eines bidirektionalen Kommunikationssystems, das einen Relay-Knoten verwendet, wobei das Verfahren umfasst:

Empfangen eines ersten Signals, das erste Daten in einem ersten Zeitschlitz eines ersten Kanals enthält, durch den Relay-Knoten;
Empfangen eines zweiten Signals, das zweite Daten in einem zweiten Zeitschlitz eines zweiten Kanals enthält, durch den Relay-Knoten, wobei das erste Signal und das zweite Signal zwischen einem Quellknoten und einem Zielknoten, die über den Relay-Knoten miteinander kommunizieren, ausgetauscht werden;
Bestimmen einer ersten Vorcodierungsmatrix durch den Relay-Knoten;
**dadurch gekennzeichnet, dass** das Verfahren ferner umfasst:

Bestimmen einer zweiten Vorcodierungsmatrix durch den Relay-Knoten;
Anwenden der ersten Vorcodierungsmatrix auf die ersten Daten, um vorcodierte erste Daten zu erzeugen, durch den Relay-Knoten;
Anwenden der zweiten Vorcodierungsmatrix auf die zweiten Daten, um vorcodierte zweite Daten zu erzeugen, durch den Relay-Knoten;
Erzeugen eines dritten Signals durch Kombinieren der vorcodierten ersten Daten und der vorcodierten zweiten Daten durch den Relay-Knoten; und
Senden des dritten Signals auf dem ersten Kanal und auf dem zweiten Kanal durch den Relay-Knoten.

2. Verfahren nach Anspruch 1, wobei das dritte Signal ferner eine Trainingssequenz umfasst, die dem dritten Signal vorangestellt ist, wobei die Trainingssequenz eine erste Trainingssequenz und eine zweite Trainingssequenz enthält, wobei die erste Trainingssequenz für den ersten Kanal ist und die zweite Trainingssequenz für den zweiten Kanal ist.

3. Verfahren nach Anspruch 2, das ferner das Erzeugen einer ersten geschätzten Kanalmatrix für den ersten Kanal und einer zweiten geschätzten Kanalmatrix für den zweiten Kanal durch den Relay-Knoten umfasst.

4. Verfahren nach Anspruch 3, das ferner das Einfügen der ersten Vorcodierungsmatrix mal der ersten geschätzten Kanalmatrix und der zweiten Vorcodierungsmatrix mal der zweiten geschätzten Kanalmatrix zwischen der Trainingssequenz des dritten Signals durch den Relay-Knoten umfasst.

5. Verfahren nach Anspruch 4, das ferner das Quantisieren der ersten Vorcodierungsmatrix mal der ersten geschätzten Kanalmatrix und das Quantisieren der zweiten Vorcodierungsmatrix mal der zweiten geschätzten Kanalmatrix vor der Einfügung durch den Relay-Knoten umfasst, wobei das erste Signal die erste Trainingssequenz und Daten enthält und wobei das zweite Signal die zweite Trainingssequenz und Daten enthält.

6. Verfahren nach Anspruch 1, das ferner umfasst:

Bestimmen einer ersten Strahlenbündelungsmatrix durch den Relay-Knoten;
Bestimmen einer zweiten Strahlenbündelungsmatrix durch den Relay-Knoten; und
Anwenden der ersten Strahlenbündelungsmatrix auf die ersten Daten und Anwenden der zweiten Strahlenbündelungsmatrix auf die zweiten Daten vor dem Erzeugen des dritten Signals durch den Relay-Knoten.

7. Verfahren nach Anspruch 6, das ferner das Anwenden der ersten Strahlenbündelungsmatrix auf die erste vorcodierte Matrix mal der ersten geschätzten Kanalmatrix und das Anwenden der zweiten Strahlenbündelungsmatrix auf die zweite vorcodierte Matrix mal der zweiten geschätzten Kanalmatrix vor dem Einfügen der ersten vorcodierten Matrix mal der ersten geschätzten Kanalmatrix und der zweiten vorcodierten Matrix mal der zweiten geschätzten Kanalmatrix zwischen die Trainingssequenz des dritten Signals durch den Relay-Knoten umfasst.

8. Verfahren nach Anspruch 1, wobei der erste Kanal und der zweite Kanal orthogonal sind und wobei der zweite Zeitschlitz ferner eine Rückwärtsrichtung ist, die durch einen Knoten, der den ersten Zeitschlitz verwendet hat, zugeordnet worden ist.

9. Relay-Knoten eines bidirektionalen Kommunikationssystems, wobei der Relay-Knoten umfasst:

Mittel zum Empfangen eines ersten Signals, das erste Daten in einem ersten Zeitschlitz eines ersten Kanals enthält;
Mittel zum Empfangen eines zweiten Signals, das zweite Daten in einem zweiten Zeitschlitz eines zweiten Kanals enthält, wobei das erste Signal und das zweite Signal zwischen einem Quellknoten und einem Zielknoten, die über den Relay-Knoten miteinander kommunizieren, ausgetauscht werden;
Mittel zum Bestimmen einer ersten Vorcodierungsmatrix;
**dadurch gekennzeichnet, dass** der Relay-Knoten ferner umfasst:

Mittel zum Bestimmen einer zweiten Vorcodierungsmatrix; Mittel zum Anwenden der ersten Vorcodierungsmatrix auf die ersten Daten, um vorcodierte erste Daten zu erzeugen; Mittel zum Anwenden der zweiten Vorcodierungsmatrix auf die zweiten Daten, um vorcodierte zweite Daten zu erzeugen;

Mittel zum Erzeugen eines dritten Signals durch Kombinieren der vorcodierten ersten Daten und der vorcodierten zweiten Daten; und

Mittel zum Senden des dritten Signals auf dem ersten Kanal und auf dem zweiten Kanal.

10. Vorrichtung nach Anspruch 9, wobei das dritte Signal ferner eine Trainingssequenz umfasst, die dem dritten Signal vorangestellt ist, wobei die Trainingssequenz eine erste Trainingssequenz und eine zweite Trainingssequenz enthält, wobei die erste Trainingssequenz für den ersten Kanal ist und die zweite Trainingssequenz für den zweiten Kanal ist.

11. Vorrichtung nach Anspruch 9 oder 10, die ferner Mittel zum Implementieren des Verfahrens nach einem der Ansprüche 3 bis 8 umfasst.

12. Verfahren, wobei das Verfahren umfasst:

Senden eines ersten Signals, wobei das erste Signal erste Daten enthält;

Empfangen eines zweiten Signals, wobei das zweite Signal vorcodierte Daten enthält, die durch Anwenden einer ersten Vorcodierungsmatrix auf die ersten Daten und durch Anwenden einer zweiten Vorcodierungsmatrix auf dritte Daten erzeugt werden, wobei die erste Vorcodierungsmatrix und die zweite Vorcodierungsmatrix durch einen Relay-Knoten bestimmt worden sind;

**dadurch gekennzeichnet, dass** das Verfahren ferner umfasst:

gemeinsames Decodieren der dritten Daten durch Subtrahieren eines Signals, das die erste Vorcodierungsmatrix, angewendet auf die ersten Daten, enthält, von dem zweiten Signal, wobei die erste Vorcodierungsmatrix bekannt ist.

13. Verfahren nach Anspruch 12, wobei eine erste Strahlenbündelungsmatrix auf die erste Vorcodierungsmatrix und auf die ersten Daten angewendet wurde und wobei eine zweite Strahlenbündelungsmatrix auf die zweite Vorcodierungsmatrix und auf die dritten Daten angewendet wurde.

14. Vorrichtung, die umfasst:

Mittel zum Senden eines ersten Signals, wobei das erste Signal erste Daten enthält;

Mittel zum Empfangen eines zweiten Signals, wobei das zweite Signal vorcodierte Daten enthält, die durch Anwenden einer Vorcodierungsmatrix auf die ersten Daten und durch Anwenden einer zweiten Vorcodierungsmatrix auf dritte Daten erzeugt werden, wobei die erste Vorcodierungsmatrix und die zweite Vorcodierungsmatrix durch einen Relay-Knoten bestimmt worden sind;

**dadurch gekennzeichnet, dass** die Vorrichtung ferner umfasst:

Mittel zum gemeinsamen Decodieren der dritten Daten durch Subtrahieren eines Signals, das die erste Vorcodierungsmatrix, angewendet auf die ersten Daten, enthält, von dem zweiten Signal, wobei die erste Vorcodierungsmatrix bekannt ist.

15. Vorrichtung nach Anspruch 14, wobei eine erste Strahlenbündelungsmatrix auf die erste Vorcodierungsmatrix und auf die ersten Daten angewendet wurde und wobei eine zweite Strahlenbündelungsmatrix auf die zweite Vorcodierungsmatrix und auf die dritten Daten angewendet wurde.

**Revendications**

1. Procédé pour faire fonctionner un système de communication bidirectionnel en utilisant un noeud de relais, ledit procédé comprenant :

la réception, par ledit noeud de relais, d'un premier signal incluant des premières données dans un premier intervalle de temps d'un premier canal ;

la réception, par ledit noeud de relais, d'un deuxième signal incluant des deuxièmes données dans un deuxième intervalle de temps d'un deuxième canal, où ledit premier signal et ledit deuxième signal sont échangés entre un noeud source et un noeud de destination communiquant via ledit noeud de relais ;

la détermination, par ledit noeud de relais, d'une première matrice de précodage ;

**caractérisé en ce que** le procédé comprend en outre

la détermination, par ledit noeud de relais, d'une deuxième matrice de précodage ;
l'application, par ledit noeud de relais, de ladite première matrice de précodage auxdites premières données pour produire des premières données précodées ;
l'application, par ledit noeud de relais, de ladite deuxième matrice de précodage auxdites deuxièmes données pour produire des deuxièmes données précodées ;
la génération, par ledit noeud de relais, d'un troisième signal par la combinaison desdites premières données précodées et desdites deuxièmes données précodées ; et
la transmission, par ledit noeud de relais, dudit troisième signal sur ledit premier canal et ledit deuxième canal.

2. Procédé selon la revendication 1, dans lequel ledit troisième signal comprend en outre une séquence d'apprentissage ajoutée au début dudit troisième signal, dans lequel ladite séquence d'apprentissage inclut une première séquence d'apprentissage et une deuxième séquence d'apprentissage, ladite première séquence d'apprentissage étant pour ledit premier canal et ladite deuxième séquence d'apprentissage étant pour ledit deuxième canal.

3. Procédé selon la revendication 2, comprenant en outre la génération, par ledit noeud de relais, d'une première matrice de canal estimée pour ledit premier canal et d'une deuxième matrice de canal estimée pour ledit deuxième canal.

4. Procédé selon la revendication 3, comprenant en outre l'insertion, par ledit noeud de relais, de ladite première matrice de précodage multipliée par ladite première matrice de canal estimée et de ladite deuxième matrice de précodage multipliée par ladite deuxième matrice de canal estimée dans ladite séquence d'apprentissage dudit troisième signal.

5. Procédé selon la revendication 4, comprenant en outre la quantification, par ledit noeud de relais, de ladite première matrice de précodage multipliée par ladite première matrice de canal estimée et la quantification de ladite deuxième matrice de précodage multipliée par ladite deuxième matrice de canal estimée avant ladite insertion, dans lequel ledit premier signal inclut lesdites premières séquence d'apprentissage et données, et dans lequel ledit deuxième signal inclut lesdites deuxièmes séquence d'apprentissage et données.

6. Procédé selon la revendication 1, comprenant en outre :

la détermination, par ledit noeud de relais, d'une première matrice de formation de faisceau ;
la détermination, par ledit noeud de relais, d'une deuxième matrice de formation de faisceau ; et
l'application, par ledit noeud de relais, de ladite première matrice de formation de faisceau auxdites premières données et l'application de ladite deuxième matrice de formation de faisceau auxdites deuxièmes données avant la génération dudit troisième signal.

7. Procédé selon la revendication 6, comprenant en outre l'application, par ledit noeud de relais, de ladite première matrice de formation de faisceau à ladite première matrice précodée multipliée par ladite première matrice de canal estimée et l'application de ladite deuxième matrice de formation de faisceau à ladite deuxième matrice précodée multipliée par ladite deuxième matrice de canal estimée avant l'insertion de ladite première matrice précodée multipliée par ladite première matrice de canal estimée et de ladite deuxième matrice précodée multipliée par ladite deuxième matrice de canal estimée dans ladite séquence d'apprentissage dudit troisième signal.

8. Procédé selon la revendication 1, dans lequel ledit premier canal et ledit deuxième canal sont orthogonaux, et dans lequel en outre ledit deuxième intervalle de temps est une direction inverse accordée par un noeud qui a utilisé ledit premier intervalle de temps.

9. Noeud de relais d'un système de communication bidirectionnelle, le noeud de relais comprenant :

un moyen pour recevoir un premier signal incluant des premières données dans un premier intervalle de temps d'un premier canal ;
un moyen pour recevoir un deuxième signal incluant des deuxièmes données dans un deuxième intervalle de temps d'un deuxième canal, où ledit premier signal et ledit deuxième signal sont échangés entre un noeud source et un noeud de destination communiquant via ledit noeud de relais ;
un moyen pour déterminer une première matrice de précodage ;

**caractérisé en ce que** le noeud de relais comprend en outre

un moyen pour déterminer une deuxième matrice de précodage ;
un moyen pour appliquer ladite première matrice de précodage auxdites premières données pour

produire des premières données précodées ;

un moyen pour appliquer ladite deuxième matrice de précodage auxdites deuxièmes données pour produire des deuxièmes données précodées ;
un moyen pour générer un troisième signal en combinant lesdites premières données précodées et lesdites deuxièmes données précodées ; et
un moyen pour transmettre ledit troisième signal sur ledit premier canal et sur ledit deuxième canal.

10. Appareil selon la revendication 9, dans lequel ledit troisième signal comprend en outre une séquence d'apprentissage ajoutée au début dudit troisième signal, dans lequel ladite séquence d'apprentissage inclut une première séquence d'apprentissage et une deuxième séquence d'apprentissage, ladite première séquence d'apprentissage étant pour ledit premier canal et ladite deuxième séquence d'apprentissage étant pour ledit deuxième canal.

11. Appareil selon la revendication 9 ou 10, comprenant en outre un moyen pour mettre en oeuvre le procédé selon l'une des revendications 3 à 8.

12. Procédé, ledit procédé comprenant :

la transmission d'un premier signal, où ledit premier signal inclut des premières données ;
la réception d'un deuxième signal, où ledit deuxième signal inclut des données précodées générées par l'application d'une première matrice de précodage auxdites premières données et l'application d'une deuxième matrice de précodage à des troisièmes données, ladite première matrice de précodage et ladite deuxième matrice de précodage ayant été déterminées par un noeud de relais ;

**caractérisé en ce que** le procédé comprend en outre

le décodage conjoint desdites troisièmes données par la soustraction dudit deuxième signal d'un signal incluant ladite première matrice de précodage appliquée auxdites premières données, ladite première matrice de précodage étant connue.

13. Procédé selon la revendication 12, dans lequel une première matrice de formation de faisceau a été appliquée à ladite première matrice de précodage et auxdites premières données et une deuxième matrice de formation de faisceau a été appliquée à ladite deuxième matrice de précodage et auxdites troisièmes données.

14. Appareil comprenant :

un moyen pour transmettre un premier signal, où ledit premier signal inclut des premières données ;
un moyen pour recevoir un deuxième signal, où ledit deuxième signal inclut des données précodées générées par l'application d'une première matrice de précodage auxdites premières données et l'application d'une deuxième matrice de précodage à des troisièmes données, ladite première matrice de précodage et ladite deuxième matrice de précodage ayant été déterminées par un noeud de relais ; **caractérisé en ce que** l'appareil comprend en outre
un moyen pour décoder conjointement lesdites troisièmes données par la soustraction dudit deuxième signal d'un signal incluant ladite première matrice de précodage appliquée auxdites premières données, ladite première matrice de précodage étant connue.

15. Appareil selon la revendication 14, dans lequel une première matrice de formation de faisceau a été appliquée à ladite première matrice de précodage et auxdites premières données et une deuxième matrice de formation de faisceau a été appliquée à ladite deuxième matrice de précodage et auxdites troisièmes données.

Fig. 1a

Fig. 1b

EP 2 599 234 B1

1st stage

$S_1$

RN

$S_1$

Node$_1$

Node$_2$

Fig. 2a

Fig. 2

2nd stage

RN

$S_2$

$S_2$

Node$_1$

Node$_2$

Fig. 2b

3rd stage

$f(S_1, S_2)$

RN

$f(S_1, S_2)$

Node$_1$

Node$_2$

Fig. 2c

EP 2 599 234 B1

Fig. 3a

Fig. 3b

Fig. 3c

**1st Stage: Node₁ ➔ RN (training sequence $T_1$ and data $X_1$)**

| $T_1$ | $X_1$ |
|---|---|

| $H_{R1}T_1$ | $H_{R1}X_1 + N_{R1}$ |
|---|---|

**2nd Stage: Node₂ ➔ RN (training sequence $T_2$ and data $X_2$)**

| $T_2$ | $X_2$ |
|---|---|

| $H_{R2}T_2$ | $H_{R2}X_2 + N_{R2}$ |
|---|---|

**3rd Stage: RN ➔ Node_i (2 training sequences and mixed data $X_R$)**

| $W_1 H_{R1} T_1$ | $W_2 H_{R2} T_2$ | $W_1 H_{R1} X_1 + W_2 H_{R2} X_2 + (W_1 N_{R1} + W_2 N_{R2})$ |
|---|---|---|

| $H_{iR} W_1 H_{R1} T_1$ | $H_{iR} W_2 H_{R2} T_2$ | $H_{iR} W_1 H_{R1} X_1 + H_{iR} W_2 H_{R2} X_2 + H_{iR}(W_1 N_{R1} + W_2 N_{R2}) + N_{iR}$ |
|---|---|---|

Fig. 4a

EP 2 599 234 B1

**1st Stage: Node$_1$ → RN (training sequence T$_1$ and data X$_1$)**

| $T_1$ | $X_1$ |
|---|---|

| $H_{R1}T_1$ | $H_{R1}X_1+N_{R1}$ |
|---|---|

**2nd Stage: Node$_2$ → RN (training sequence T$_2$ and data X$_2$)**

| $T_2$ | $X_2$ |
|---|---|

| $H_{R2}T_2$ | $H_{R2}X_2+N_{R2}$ |
|---|---|

**3rd Stage: RN → Node$_i$ (training sequences T$_R$, preambles and mixed data X$_R$)**

| $T_R$ | $[W_1H_{R1}]$ | $[W_2H_{R2}]$ | $W_1H_{R1}X_1+W_2H_{R2}X_2+(W_1N_{R1}+W_2N_{R2})$ |
|---|---|---|---|

| $H_{iR}T_R$ | $H_{iR}[W_1H_{R1}]$ | $H_{iR}[W_2H_{R2}]$ | $H_{iR}W_1H_{R1}X_1+H_{iR}W_2H_{R2}X_2+H_{iR}(W_1N_{R1}+W_2N_{R2})+N_{iR}$ |
|---|---|---|---|

Note that [Z] contains the information of matrix Z, serving as a preamble. It can be a quantized or compressed version of Z.

Fig. 4b

EP 2 599 234 B1

## 1st Stage: Node₁ ➜ RN (training sequence T₁ and data X₁)

| $Q_1T_1$ | $Q_1X_1$ |
|---|---|

| $H_{R1}Q_1T_1$ | $H_{R1}Q_1X_1+N_{R1}$ |
|---|---|

## 2nd Stage: Node₂ ➜ RN (training sequence T₂ and data X₂)

| $Q_2T_2$ | $Q_2X_2$ |
|---|---|

| $H_{R2}Q_2T_2$ | $H_{R2}Q_2X_2+N_{R2}$ |
|---|---|

## 3rd Stage: RN ➜ Nodeᵢ (2 training sequences and mixed data X_R)

| | | $W_1H_{R1}Q_1X_1+W_2H_{R2}Q_2X_2+W_1N_{R1}+W_2N_{R2}$ |
|---|---|---|

$W_1H_{R1}Q_1T_1$     $W_2H_{R2}Q_2T_2$

$H_{iR}W_1H_{R1}Q_1T_1$     $H_{iR}W_2H_{R2}Q_2T_2$

$$H_{iR}W_1H_{R1}Q_1X_1+H_{iR}W_2H_{R2}Q_2X_2+H_{iR}(W_1N_{R1}+W_2N_{R2})+N_{iR}$$

Fig. 5a

EP 2 599 234 B1

**1st Stage: Node$_1$ → RN (training sequence T$_1$ and data X$_1$)**

| $Q_1T_1$ | $Q_1X_1$ |
|---|---|

→ 
| $H_{R1}Q_1T_1$ | $H_{R1}Q_1X_1+N_{R1}$ |
|---|---|

**2nd Stage: Node$_2$ → RN (training sequence T$_2$ and data X$_2$)**

| $Q_2T_2$ | $Q_2X_2$ |
|---|---|

→ 
| $H_{R2}Q_2T_2$ | $H_{R2}Q_2X_2+N_{R2}$ |
|---|---|

**3rd Stage: RN → Node$_i$ (training sequences T$_R$, preambles and mixed data X$_R$)**

| $T_R$ | | | $W_1H_{R1}Q_1X_1+W_2H_{R2}Q_2X_2+W_1N_{R1}+W_2N_{R2}$ |
|---|---|---|---|

$[W_1H_{R1}Q_1]$  $[W_2H_{R2}Q_2]$  ⇓

| $H_{iR}T_R$ | | | |
|---|---|---|---|

$H_{iR}[W_1H_{R1}Q_1]$   $H_{iR}[W_2H_{R2}Q_2]$

$$H_{iR}W_1H_{R1}Q_1X_1+H_{iR}W_2H_{R2}Q_2X_2+H_{iR}(W_1N_{R1}+W_2N_{R2})+N_{iR}$$

Note that [Z] contains the information of matrix **Z**, serving as a preamble. It can be a quantized or compressed version of **Z**.

Fig. 5b

EP 2 599 234 B1

Fig. 6

Start

Receive 1st signal in a 1st time slot of a 1st channel — 705

Receive 2nd signal in a 2nd time slot of a 2nd channel — 710

Determining a 1st pre-coding matrix to maximize joint channel capacity of the channels — 715

Determining a 2nd pre-coding matrix to maximize joint channel capacity of The channels — 720

applying the 1st pre-coding matrix to 1st data — 725

applying the 2nd pre-coding matrix to 2nd data — 730

generating a 3rd signal by mixing (combining) the pre-coded 1st data & the pre-coded 2nd data — 735

transmitting the 3rd signal — 740

End

Fig. 7

30

**EP 2 599 234 B1**

**Patent documents cited in the description**

- US 20070149117 A1, Hwang